(19) Europäisches Patentamt
European Patent Office
Office européen des brevets

(11) **EP 2 192 786 A1**

(12) **EUROPEAN PATENT APPLICATION**

(43) Date of publication:
**02.06.2010  Bulletin 2010/22**

(51) Int Cl.:
***H04N 7/50*** (2006.01)          ***H04N 7/26*** (2006.01)

(21) Application number: **08020651.9**

(22) Date of filing: **27.11.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **Panasonic Corporation**<br>**Kadoma-shi**<br>**Osaka 571-8501 (JP)** | (72) Inventors:<br>• **Narroschke, Matthias**<br>**63225 Langen (DE)**<br>• **Merie, Pauline**<br>**63225 Langen (DE)**<br><br>(74) Representative: **Grünecker, Kinkeldey,**<br>**Stockmair & Schwanhäusser**<br>**Anwaltssozietät**<br>**Leopoldstrasse 4**<br>**80802 München (DE)** |

(54) **Frequency domain filters for video coding**

(57)    The present invention provides a method for encoding, a method for decoding, an apparatus for encoding and an apparatus for decoding a video signal. The video signal at the encoder is first transformed into the frequency domain. Based on a video signal in the frequency domain, filter data are determined to be used for filtering in the frequency domain. The filter data are then provided to a decoder side. A decoder in accordance with the present invention is capable of obtaining such filter data for filtering in frequency domain from the encoder side, based thereon setting-up a filter to be applied in the frequency domain, and filtering a video signal by the filter.

## Fig. 15

**Description**

The present invention relates to a method and an apparatus for video encoding and decoding using filters for filtering of video signals.

BACKGROUND OF THE INVENTION

At present, the majority of standardized video coding algorithms is based on hybrid video coding. Hybrid video coding methods typically combine several different lossless and lossy compression schemes in order to achieve the desired compression gain. Hybrid video coding is also the basis for ITU-T standards (H.26x standards such as H.261, H.263) as well as ISO/IEC standards (MPEG-X standards such as MPEG-1, MPEG-2, and MPEG-4). The most recent and advanced video coding standard is currently the standard denoted as H.264/MPEG-4 advanced video coding (AVC) which is a result of standardization efforts by joint video team (JVT), a joint team of ITU-T and ISO/IEC MPEG groups.

A video signal input to an encoder is a sequence of images called frames, each frame being a two-dimensional matrix of pixels. All the above-mentioned standards based on hybrid video coding include subdividing each individual video frame into smaller blocks consisting of a plurality of pixels. Typically, a macroblock (usually denoting a block of 16 x 16 pixels) is the basic image element, for which the encoding is performed. However, various particular encoding steps may be performed for smaller image elements, denoted submacroblocks or simply blocks and having the size of, for instance, 8 x 8, 4 x 4, 16 x 8, etc.

Typically, the encoding steps of a hybrid video coding include a spatial and/or a temporal prediction. Accordingly, each block to be encoded is first predicted using either the blocks in its spatial neighborhood or blocks from its temporal neighborhood, i.e. from previously encoded video frames. A block of differences between the block to be encoded and its prediction, also called block of prediction residuals, is then calculated. Another encoding step is a transformation of a block of residuals from the spatial (pixel) domain into a frequency domain. The transformation aims at reducing the correlation of the input block. Further encoding step is quantization of the transform coefficients. In this step the actual lossy (irreversible) compression takes place. Usually, the compressed transform coefficient values are further compacted (losslessly compressed) by means of an entropy coding. In addition, side information necessary for reconstruction of the encoded video signal is encoded and provided together with the encoded video signal. This is for example information about the spatial and/or temporal prediction, amount of quantization, etc.

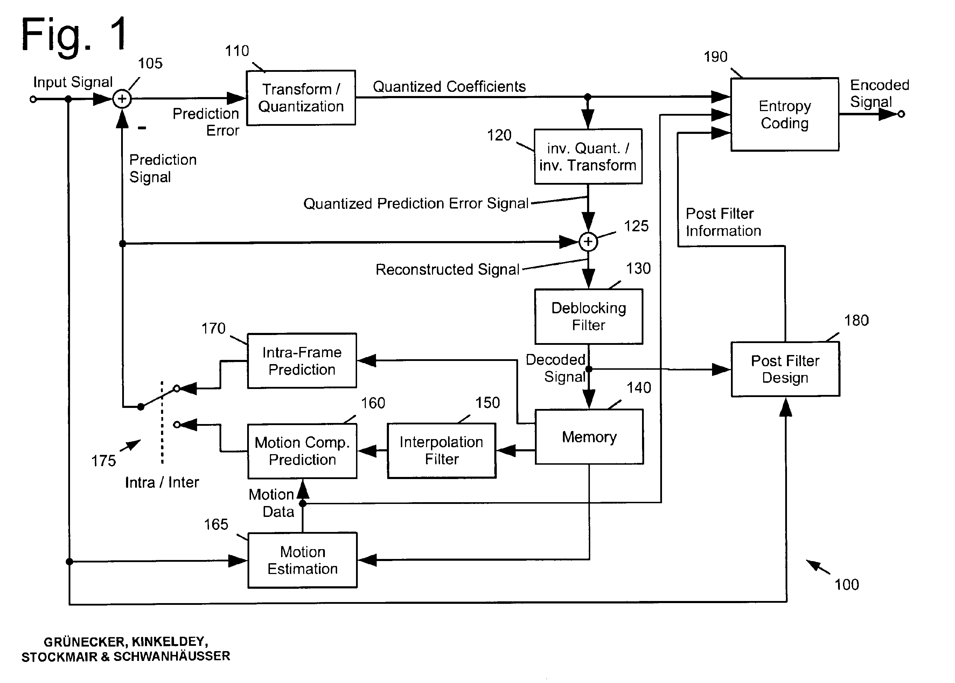

Figure 1 is an example of a typical H.264/MPEG-4 AVC standard compliant video encoder 100. The H.264/MPEG-4 AVC standard combines all above-mentioned encoding steps. A subtractor 105 first determines differences between a current block (block to be encoded) of a video image (input signal) and a corresponding predicted block (prediction signal). A temporally predicted block is a block from the previously encoded image, which is stored in a memory 140. A spatially predicted block is interpolated from the values of boundary pixels in the neighboring blocks, which have been previously encoded and stored in the memory 140. The memory unit 140 thus operates as a delay unit that allows a comparison between current signal values and the prediction signal generated from previous signal values. The memory 140 can store a plurality of previously encoded video frames. The difference between the input signal and the prediction signal, denoted prediction error or residual, is transformed and quantized 110. Entropy encoder 190 is then applied to the quantized transformation coefficients in order to further reduce the amount of data in a lossless way. This is mainly achieved by applying a code with code words of variable length wherein the length of a code word is chosen based on the probability of occurrence thereof.

The H.264/MPEG-4 AVC includes two functional layers, a Video Coding Layer (VCL) and a Network Abstraction Layer (NAL). The VCL provides the encoding functionality as briefly described above. The NAL encapsulates the encoded prediction error signal together with the side information necessary for the decoding of video into standardized units called NAL units according to their further application such as transmission over a channel or storing in storage. There are VCL NAL units containing the compressed video data and the related information, as well as non-VCL units encapsulating additional data such as parameter set relating to an entire video sequence, or recently added Supplemental Enhancement Information (SEI) providing additional information that can be use to improve the decoding performance such as post filter hint.

Within the video encoder 100, a decoding unit is incorporated for obtaining a decoded video signal. In compliance with the encoding steps, the decoding steps include inverse quantization and inverse transformation 120. The decoded prediction error signal differs from the original prediction error signal due to the quantization error, called also quantization noise. A reconstructed signal is then obtained by adding 125 the decoded prediction error signal to the prediction signal. In order to maintain the compatibility between the encoder side and the decoder side, the prediction signal is obtained based on the encoded and subsequently decoded video signal, which is known at both sides. Due to the quantization, quantization noise is superposed to the reconstructed video signal. Due to the block-wise coding, the superposed noise often has blocking characteristics, which result, in particular for strong quantization, in visible block boundaries in the decoded image. Such blocking artifacts have a negative effect upon human visual perception. In order to reduce these artifacts, a deblocking filter 130 is applied to every reconstructed image block. The deblocking filter is applied to the reconstructed signal, which is the sum of the prediction signal and the decoded prediction error signal. The video signal after deblocking is the decoded signal, which is generally displayed at the decoder side (if no post filtering is applied). The deblocking filter in H.264/MPEG-4 AVC has the capability of local adaptation. In the case of a high degree of blocking noise, a strong (narrow-band) low pass filter is applied, whereas for a low degree of blocking noise, a weaker (broad-band) low pass filter is applied. Deblocking filter generally smoothes the block edges leading to an improved subjective quality of the decoded images. Moreover, since the filtered part of an image is used for the motion compensated prediction of further images, the filtering also reduces the prediction errors, and thus enables improvement of coding efficiency. The decoded video signal is then stored in the memory 140.

The prediction signal in H.264/MPEG-4 AVC is obtained either by a temporal or by a spatial prediction. The type of prediction can be varied on a per macroblock basis. Macroblocks predicted using temporal prediction are called inter-encoded and macroblocks predicted using spatial prediction are called intra-encoded. Here, the term "inter" relates to inter-picture prediction, i.e. prediction using information from previous or following frames. The term "intra" refers to the spatial prediction, which only uses the already encoded information within the current video frame. The type of prediction for a video frame can be set by the user or selected by the video encoder so as to achieve a possibly high compression gain. In accordance with the selected type of prediction, an intra/inter switch 175 provides corresponding prediction signal to the subtractor 105.

Intra-encoded images (called also I-type images or I frames) consist solely of macroblocks that are intra-encoded, i.e. intra-encoded images can be decoded without reference to any other previously decoded image. The intra-encoded images provide error resilience for the encoded video sequence since they refresh the video sequence from errors possibly propagated from frame to frame due to temporal prediction. Moreover, I frames enable a random access within the sequence of encoded video images.

Intra-fame prediction uses a predefined set of intra-prediction modes, which basically predict the current block using the boundary pixels of the neighboring blocks already encoded. The different types of spatial prediction refer to a different edge direction, i.e. the direction of the applied two-dimensional interpolation. The prediction signal obtained by such interpolation is then subtracted from the input signal by the subtractor 105 as described above. In addition, spatial prediction type information is entropy encoded and provided together with the encoded video signal.

In order to be decoded, inter-encoded images require also the previously encoded and subsequently decoded image(s). Temporal prediction may be performed uni-directionally, i.e., using only video frames ordered in time before the current frame to be encoded, or bidirectionally, i.e., using also video frames following the current frame. Uni-directional temporal prediction results in inter-encoded images called P frames; bi-directional temporal prediction results in inter-encoded images called B frames. In general, an inter-encoded image may comprise any of P-, B-, or even 1-type macroblocks. An inter-encoded macroblock (P- or B- macroblock) is predicted by employing motion compensated prediction 160. First, a best-matching block is found for the current block within a previously encoded and decoded video frame by a motion estimator 165. The best-matching block then becomes a prediction signal and the relative displacement (motion) between the current block and its best match is then signalized as motion data in the form of two-dimensional motion vectors within the side information provided together with the encoded video data. In order to optimize prediction accuracy, motion vectors may be determined with a sub-pixel resolution e.g. half pixel or quarter pixel resolution. A motion vector with sub-pixel resolution may point to a position within an already decoded frame where no real pixel value is available, i.e. a sub-pixel position. Hence, spatial interpolation of such pixel values is needed in order to perform motion compensation. This is achieved by interpolation filter 150. According to the H.264/MPEG-4 AVC standard, a six-tap Wiener interpolation filter with fixed filter coefficients and a bilinear filter are applied in order to obtain pixel values for sub-pixel positions.

For both the intra- and the inter-encoding modes, the differences between the current input signal and the prediction signal are transformed and quantized by transform quantization unit 110, resulting in the quantized transform coefficients. Generally, an orthogonal transformation such as a two-dimensional discrete cosine transformation (DCT) or an integer version thereof is employed since it reduces the correlation of the natural video images efficiently. After the transformation, lower frequency components are usually more important for image quality then high frequency components so that more bits can be spent for coding the low frequency components than the high frequency components. After quantization, the two-dimensional matrix of quantized transformation coefficients is converted into a one-dimensional array to pass the entropy encoder. Typically, this conversion is performed by a so-called zig-zag scanning, which starts in the upper left corner of the two-dimensional array and scans the two-dimensional array in a predetermined sequence ending in the lower right corner. As the energy is typically concentrated in the left upper part of the image, corresponding to the lower frequencies, the zig-zag scanning results in an array where usually the last values are zero. This allows for efficient encoding using run-length codes as a part of/before the actual entropy coding.

H.264/MPEG-4AVC employs scalar quantization 110, which can be controlled by a quantization parameter (QP) and a customizable quantization matrix (QM). One of 52 quantizers is selected for each macroblock by the quantization parameter. In addition, quantization matrix is specifically designed to keep certain frequencies in the source to avoid losing image quality. Quantization matrix in H.264/MPEG-4 AVC can be adapted to the video sequence and signalized together with the video data.

In order to improve the image quality, a so-called post filter 280 may be applied at the decoder side 200. The H.264/MPEG-4 AVC standard allows the sending of post filter information for such a post filter via Supplemental Enhancement Information (SEI) message. The post filter information is determined at the encoder side by means of a post filter design unit 180, which compares the locally decoded signal and original input signal. The output of the post filter design unit 180 is also fed to the entropy coding unit 190 in order to be encoded and inserted into the encoded signal. The entropy coding unit 190 employs different variable length codes for different type of information to be encoded in order to adapt to the statistics thereof.

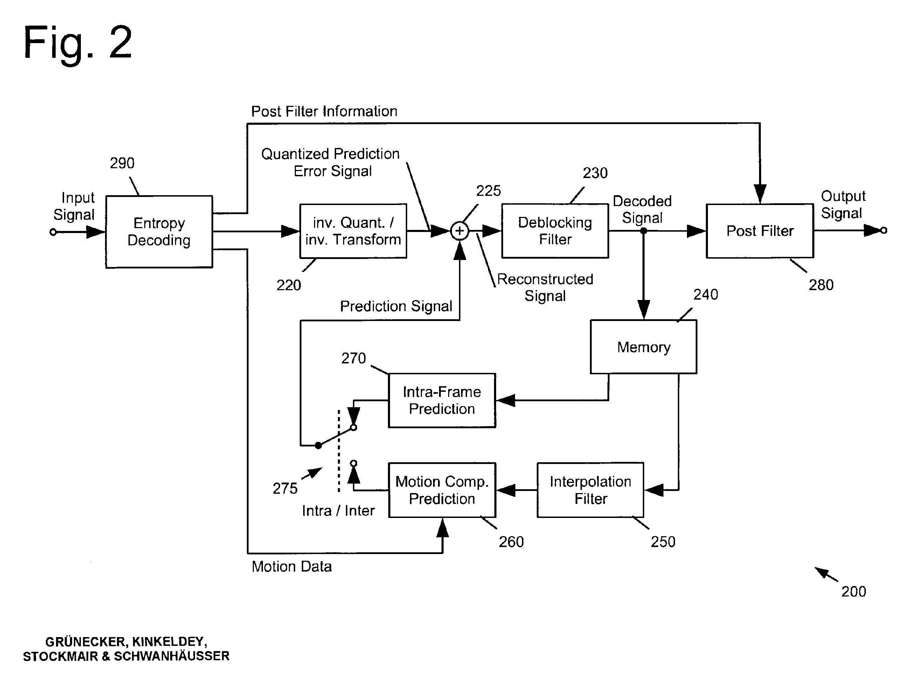

Figure 2 illustrates an example decoder 200 compliant with the H.264/AVC video coding standard. The encoded video signal (input signal to the decoder) first passes to entropy decoder 290, which decodes the quantized transformation coefficients, the information elements necessary for decoding such as motion data, type of prediction etc., and the post filter information. The quantized transformation coefficients are inversely scanned in order to obtain a two-dimensional matrix, which is then fed to inverse quantization and inverse transformation 220. After inverse quantization and inverse transformation, a decoded (quantized) prediction error signal is obtained, which corresponds to the differences obtained by subtracting the prediction signal from the signal input to the encoder. The prediction signal is obtained from either a temporal or a spatial prediction 260 and 270, respectively, which are switched 275 in accordance with a received information element signalizing the prediction applied at the encoder. The decoded information elements further include the information necessary for the prediction such as prediction type in the case of intra-prediction and motion data in the case of motion compensated prediction. Depending on the current value of the motion vector, interpolation of pixel values may be needed in order to perform the motion compensated prediction. This interpolation is performed by an interpolation filter 250. The quantized prediction error signal in the spatial domain is then added by means of an adder 225 to the prediction signal obtained either from the motion compensated prediction 260 or intra-frame prediction 270. The reconstructed image may be passed through a deblocking filter 230 and the resulting decoded signal is stored in the memory 240 to be applied for temporal or spatial prediction of the following blocks.

The post filter information is fed to a post filter 280, which sets up a post filter accordingly. The post filter is then applied to the decoded signal in order to further improve the image quality. Thus, the post filter is capable of adapting to the properties of the video signal entering the encoder on a per-frame basis.

In summary, there are three types of filter used in the latest standard H.264/MPEG-4 AVC: an interpolation filter, a deblocking filter and a post filter. In general, the suitability of a filter depends on the image to be filtered. Therefore, a filter design capable of adapting the image characteristics is advantageous. The coefficients of such a filter may be designed as Wiener filter coefficients.

The current H.264/MPEG-4 AVC standard furthermore allows the usage of an adaptive post filter. For this purpose, a post filter is estimated at the encoder for each image by a post filter design unit 180 as described above. The post filter design unit generates filter information (a so-called post filter hint), which is transmitted to the decoder in the form of an SEI message. At the decoder, the filter information may be used by a post filter, which is applied on the decoded signal before displaying. Filter information that is transmitted from the encoder to the decoder can either be filter coefficients or a cross correlation vector. Transmitting such side information may improve the quality of filtering, but, on the other hand, requires additional bandwidth. Using the transmitted or calculated filter coefficients, the entire image is post filtered. The deblocking filter in H.264/MPEG-4 AVC is used as a loop filter to reduce blocking artifacts at block edges. All three types of filter may be estimated as a Wiener filter.

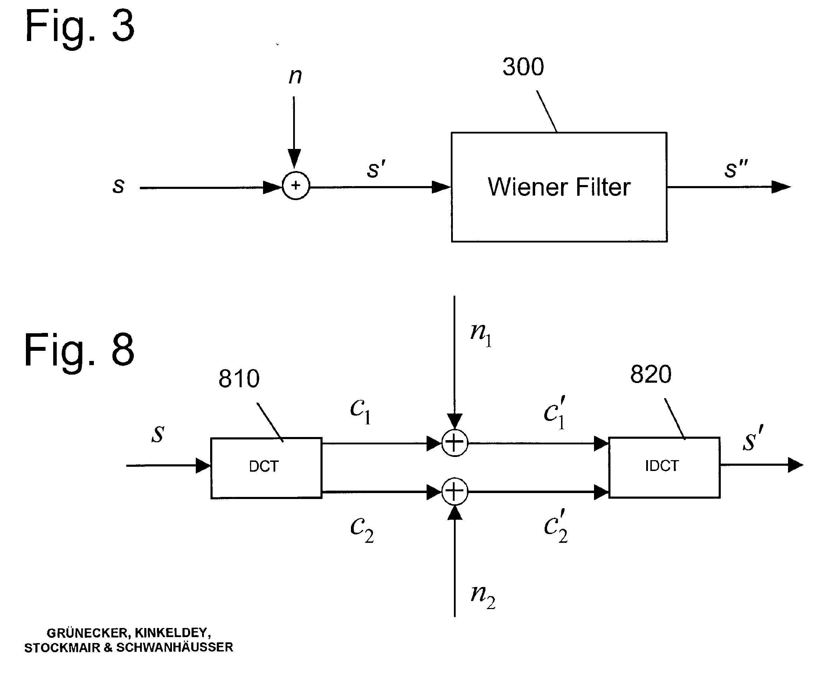

Figure 3 illustrates a signal flow using a Wiener filter 300 for noise reduction. To an input signal $s$, noise $n$ is added, resulting in a noisy signal $s'$ to be filtered. With the goal of reducing the noise $n$, a Wiener filter is applied to the signal $s$; resulting in the filtered signal $s''$. The Wiener filter 300 is designed to minimize the mean square error between the input signal $s$, which is a desired signal, and the filtered signal $s''$, This means that Wiener filter coefficients $w$ correspond to the solution of optimization problem $\arg_w \min E[(s-s'')^2]$ which can be formulated as a system of linear equations called Wiener-Hopf equations, operator $E[x]$ indicating the expected value of $x$. The solution is given by:

$$w = R^{-1} \cdot p,$$

where $w$ is an $M$x 1 vector containing the optimal coefficients of Wiener filter having order $M$, $M$ being a positive integer, $R^1$ denotes the inverse of an $M$x $M$ autocorrelation matrix $R$ of the noisy signal $s'$ to be filtered, and $p$ denotes an $M$x 1 cross correlation vector between the noisy signal $s'$ to be filtered and the original signal $s$ Further details on adaptive filter design can be found in S. Haykin, "4daptive Filter Theoiy", Fourth Edition, Prentice Hall Information and System Sciences Series, Prentice Hall, 2002, which is incorporated herein by reference.

Thus, one of the advantages of the Wiener filter 300 is that the filter coefficients can be determined from the autocorrelation of the corrupted (noisy) signal and the cross correlation of the corrupted signal and the desired signal. In video coding, quantization noise is superposed to the original (input) video signal in the quantization step. Wiener filtering in the context of video coding aims at the reduction of the superposed quantization noise in order to minimize the mean squared reconstruction error.

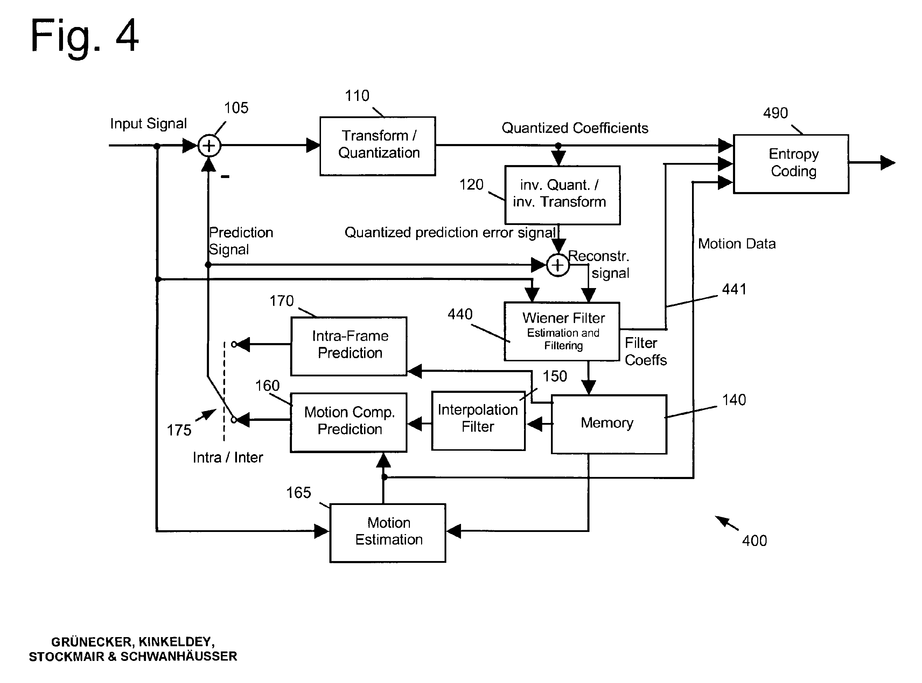

Figure 4 shows a block diagram of an H.264/MPEG-4 AVC encoder 400, wherein the deblocking filter 130 of H.264/MPEG-4 AVC is replaced by a Wiener filter 440, is described in EP 1 841 230 which is incorporated herein by reference. Deblocking filtering 440 is performed within the prediction loop before the motion compensated prediction. The filtered image is stored in the memory 140 and provided to the prediction. In-loop filtering offers the advantage of improving the signal for prediction, as well as for displaying. If the deblocking filter 130 is implemented as a Wiener filter 440, the coefficients are estimated using the input signal and the reconstructed signal. The filter coefficients 441 calculated, have to be provided to the decoder in order to ensure the same result of decoding, i.e. the same quality. Before transmitting or storing, the filter coefficients 441 may be entropy encoded 490 and included into the encoded video data as side information. A decoder compatible with such an encoder obtains the possibly encoded filter information 441, such as filter coefficients, and sets up its deblocking filter accordingly.

Figure 5 illustrates another example of encoder 500 described in EP 1 841 230 wherein the Wiener filtering 540 is applied in addition and following the deblocking filtering 130 of H.264/MPEG-4 AVC. The Wiener filter design (estimation) and filtering 540 calculates the filter coefficients 541 based on the input signal and the reconstructed signal filtered by the deblocking filter 130. The filter coefficients 541 are encoded by an entropy encoder 590, which may be adapted to the statistics thereof.

In European patent application, Application Nr. 08 0120 36.3, which is incorporated herein by reference, it is suggested to consider the prediction signal, the quantized prediction error signal and the decoded signal separately for the filter design. This allows the consideration of noise of each of these three signals individually.

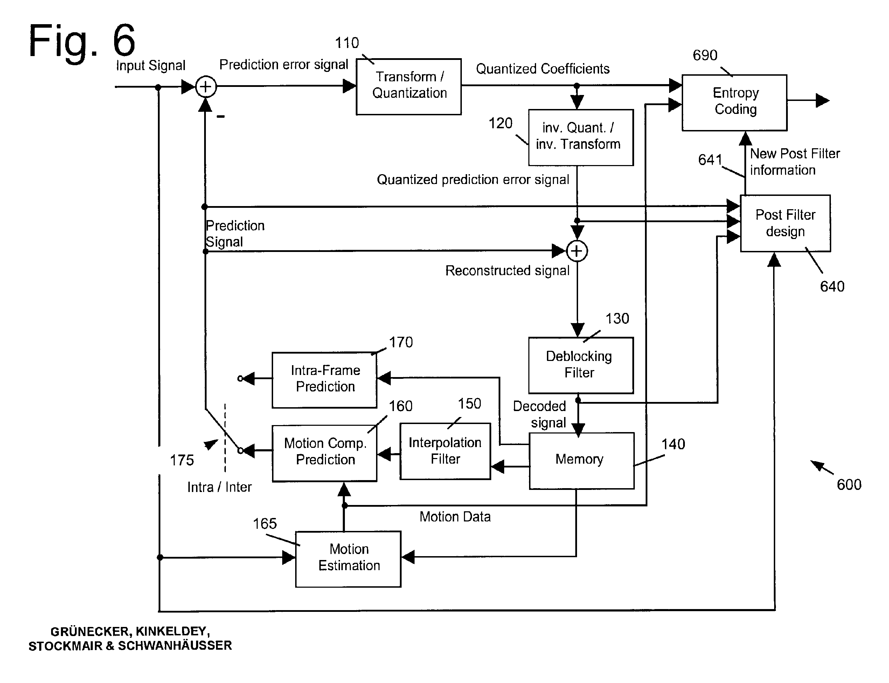

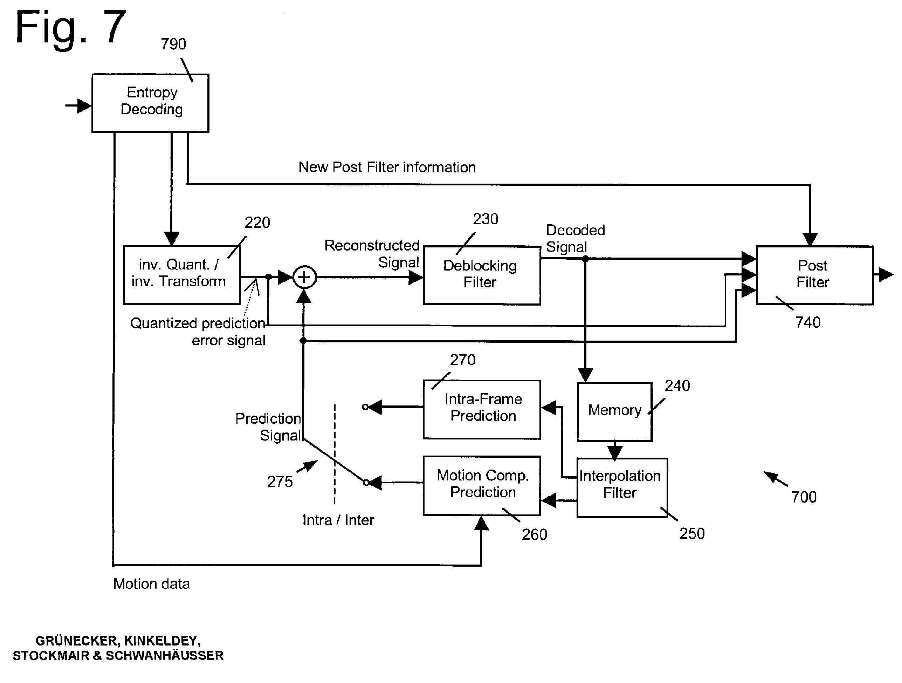

Figure 6 illustrates such example encoder 600 based on H.264/MPEG-4 AVC and Figure 7 shows the corresponding decoder 700. Accordingly, the post filter coefficients are calculated at the encoder side in the post-filter design unit 640 based on the input signal, decoded signal after applying the deblocking filter 130, prediction signal and quantized prediction error signal. The post-filter design unit 640 provides then either directly the filter coefficients or other kind of new post filter information 641 that can be used at the decoder to set up a corresponding post filter 740. Such new post filter information 641 may be, for instance, a cross correlation vector, or any other information. Again, the post filter information 641 may be entropy encoded 690 and correspondingly entropy decoded 790 at the decoder 700.

SUMMARY OF THE INVENTION

The problem underlying the present invention is based on the observation that quantization performed in the frequency domain can be seen as a superposition of each individual frequency component with possibly individual quantization noise. This means that the statistics of noise may differ for each frequency component. The approaches applied in video coding so far apply filtering (loop and/or post filtering) in the spatial domain. Filtering applied in the spatial domain, however, does not take into account the individual statistics of the quantization noise in each frequency component.

The aim of the present invention is to provide encoding and decoding mechanisms which improve the quality of the encoded and/or decoded video signal by means of an efficient filtering approach.

This is achieved by the features as set forth in the independent claims.

Preferred embodiments are the subject matter of the dependent claims.

It is the particular approach of the present invention to determine filter parameters based on a video signal in the frequency domain, to set-up a filter accordingly and to apply the filter in the frequency domain.

Such an approach provides improved quality after filtering for the cases where the noise is varying with respect to different frequency components of the signal. Such noise characteristics are typically observed in the quantization noise if quantization is performed in the frequency domain, especially if quantization weighting matrices are used or coarse quantization is applied. However, for certain transmission methods also the errors may result in frequency selective noise.

According to an aspect of the present invention, a method for encoding a video signal including at least one video frame is provided. First, a video signal is transformed into the frequency domain. Filter data for filtering a video signal in the frequency domain are then determined based on the transformed video signal in the frequency domain. The filter data are provided to a decoder side.

According to another aspect of the present invention, a method for decoding an encoded video signal including at least one video frame is provided. A filter for filtering of a video signal in the frequency domain is set up individually for blocks of the video signal in the frequency domain. The blocks of the video signal are then filtered individually using the filter in the frequency domain.

According to still another aspect of the present invention, an encoder for encoding a video signal including at least one video frame is provided. The encoder comprises a transformation unit for transforming a video signal into the frequency domain, and a filter design unit for determining filter data. The filter data are to be used for filtering a video signal in the frequency domain, and are determined based on the video signal transformed into the frequency domain. Moreover, the encoder is capable of providing the filter data to a decoder side.

According to still another aspect of the present invention, an apparatus for decoding an encoded video signal including at least one video frame is provided. The decoder comprises a filter set-up unit for setting-up a filter for blocks of the video signal individually and in the frequency domain. The decoder further comprises a filter unit for filtering the video signal by the filter also in the frequency domain and block-wise.

Preferably, the blocks for setting-up the filter, filter design and/or filtering correspond to the blocks the transformation is performed for. Here, the transformation may correspond to the transformation performed for the encoding of the video signal or to the inverse transformation performed for the decoding of the video signal. In such case, the segmentation of the video signal in frames and blocks is performed at the encoder and signalized or generically known to the decoder. However, an additional transformation may also be applied to blocks with a raster (size and placement within a frame of the video signal) different from the raster used for the encoding/decoding. In this case, the segmentation of the video signal into blocks may be necessary at both encoder and decoder, or performed at the encoder and signalized/ known to the decoder. The filtering raster may depend on the block raster used in encoding/decoding such as a block raster for transformation or a block raster for temporal and/or prediction. In particular, the block raster for filtering may be set up out of groups of blocks of the underlying encoding/decoding block raster. However, the block raster for filtering may be independent of the underlying block raster for encoding/decoding (if any). The sizes and shapes of the blocks in such a filtering raster are not necessarily identical, blocks of different shapes and sizes may be used. Preferably, squares are used of a size allowing for an efficient software/hardware implementation. However, the size and shape of the blocks in the raster may be chosen arbitrarily, for instance, according to the content of the video signal.

Preferably, at the decoder side, filter data are obtained from the encoder side, the filter data being for filtering a video signal in the frequency domain. The filter is then set-up based on the obtained filter data. Obtaining the filter data from the encoder side enables the decoder to obtain information that is only available at the encoder such as information related to the original video signal (before encoding) and thus to set-up the filter in accordance with such information.

Preferably, the encoding in accordance with the present invention also comprises spatial or temporal prediction of an input video signal prediction in the spatial domain, resulting in a prediction signal. A prediction error signal is obtained as a difference between the input video signal and the prediction signal. In accordance with an embodiment of the present invention, the transformed video signal corresponds to the transformed prediction error signal, the filter data are determined based on the transformed prediction error signal in frequency domain and the filtering is applied to the transformed prediction error signal. Alternatively, the determining of the filter data is performed based on reconstructed video signal being a sum of the prediction signal and the (quantized) prediction error signal and being transformed into the frequency domain.

Preferably, the encoding further comprises quantizing the transformed video signal and the filter data comprises calculated correlation information or filter coefficients based on the transformed video signal in frequency domain before and after the quantization. In particular, the correlation information may be a cross correlation vector of the video signal in frequency domain before and after quantization, or autocorrelation of quantization noise given by the difference between the video signal in frequency domain before and after quantization. Such information may be advantageously used to calculate filter coefficients at the encoder and/or decoder, for instance, as Wiener filter coefficients. However, the coefficients may also be directly provided to the decoder. The filter coefficients may be estimated based on solving other optimization problem than minimizing the mean squared error as in case of Wiener filtering. The filter may be a finite impulse response filter, weighting only the signal on its input, or an infinite impulse response filter, weighting also the signal of its output.

In accordance with another embodiment of the present invention, the encoding also includes setting-up a filter for filtering of the video signal based on the filter data and filtering the video signal by the filter in the frequency domain. In particular, the filtering performed at the encoder may be a loop filtering applied within the prediction loop. However, filtering is not necessarily performed at the encoder. Encoding may comprise only the filter design for determining the filter data, which are provided to the decoder. The decoder then sets up its filter accordingly and performs filtering, such as post filtering. Preferably, the filtering at the encoder is also applied block-wise. In particular, in case of a loop-filter, the filtering applied at the encoder and at the decoder is similar, based on equal filter data.

However, a decoding mechanism in accordance with the present invention may comprise both loop filtering and post filtering. Correspondingly, filter data may be determined and provided at the encoder for both a loop filter and a post filter, wherein the loop filtering may also be performed equally at the encoder and the decoder. In particular, the loop filter may perform also the de-blocking filtering. However, a loop filter may also work in addition to an existing deblocking filter or there does not need to be a deblocking filter at all.

In accordance with another embodiment of the present invention, the decoder obtains from the encoder side a prediction error signal transformed into the frequency domain and transforms it inversely into the spatial domain. Moreover a video signal in the spatial domain is predicted spatially or temporally by a prediction signal based on the encoded data received from the encoder side. A reconstructed video signal is then calculated as a sum of the prediction error signal in the spatial domain and the prediction signal. Preferably, the filtering is applied to the video signal, which is either the reconstructed video signal transformed in the frequency domain or the obtained prediction error signal in the frequency domain.

The filter data may directly comprise the filter coefficients and/or offset of the video signal in frequency domain. Preferably, the filter data are provided for each slice, in particular within the slice header. However, the filter data may be provided also in other regular or irregular time intervals, for instance, per picture, per macroblock, per block or per a number of such picture elements. The filter data is provided by storing in storage or by transmitted over a transmission channel together with the encoded video signal.

The design and filtering may be performed for selected frequencies only. In particular, filtering may be applied only to DC frequency component.

In accordance with another embodiment of the present invention, the filtering in frequency domain is disabled based on evaluation of the transformation coefficients of the same frequency used in filtering. In particular, variance of the coefficients is compared to a threshold. The threshold may be fixed or determined dynamically, for instance, based on quantization settings. Other evaluation criteria may be used, such as differences between the coefficients, etc.

The filtering in accordance with the present invention preferably weights the transformation coefficients of the same frequency in different blocks belonging to the neighbourhood of the current block to be filtered. In particular, the neighbourhood is a spatial neighbourhood comprising blocks already decoded and surrounding the current block. Alternatively or in addition, the neighbourhood is a temporal neighbourhood comprising blocks in different frames (time instants) corresponding to the present block. Preferably, the correspondence is determined using motion estimation. However, blocks at the same position within the frame as the current block may be used, or any other blocks in the previous and/or following frames.

Preferably, the video signal is encoded and/or decoded based on the H.264/MPEG-4 AVC standard and the filter data is provided within the Supplemental Enhancement Information message. However, the present invention is not limited to H.264/MPEG-4 AVC and its enhancements and followers, and may be used for any video encoding mechanism, standardized or proprietary.

In accordance with still another embodiment of the present invention, the prediction signal, the quantized prediction error signal, and the reconstructed signal are considered separately in the filtering process, i.e. when determining the filter data at the encoder and/or when setting-up the filter at the decoder. Alternatively, only the prediction signal or the prediction error signal is filtered. In order to perform filtering using filter of an order higher than one, the prediction signal and/or the prediction error signal of the previously filtered blocks are stored in a memory.

In accordance with another aspect of the present invention, a computer program product comprising a computer-readable medium having a computer-readable program code embodied thereon is provided, the program code being adapted to carry out the present invention.

In accordance with yet another aspect of the present invention, a system for transferring a video signal from an encoder side to a decoder side is provided, comprising an encoder as described above, a channel for storing or transmitting the encoded video signal, and a decoder as described above. In accordance with an embodiment of the present invention, the channel corresponds to the storing medium, for instance, a volatile or a non-volatile memory, an optic or a magnetic storing medium such as CD, DVD, BD or a hard disc, a Flash memory or any other storing means. In another embodiment of the present invention, the channel is a transmission medium, which can be formed by resources of a wireless or a wired system, or any combination of both in accordance with any standardized or proprietary transmission technology/system such as Internet, WLAN, UMTS, ISDN, xDSL, etc.

The above and other objects and features of the present invention will become more apparent from the following description and preferred embodiments given in conjunction with the accompanying drawings in which:

Figure 1      is a block diagram of a conventional H.264/MPEG-4 AVC video encoder;

Figure 2      is a block diagram of a conventional H.264/MPEG-4 AVC video decoder;

Figure 3      is a schematic drawing illustrating Wiener filter design;

Figure 4      is a block diagram of a video encoder with deblocking filter replaced by a Wiener filter;

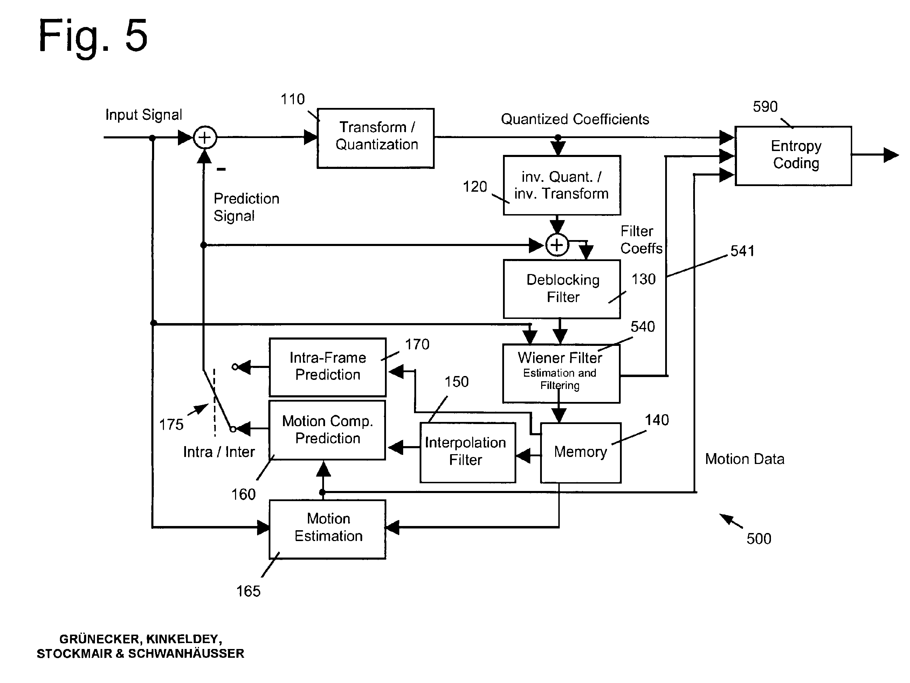

Figure 5      is a block diagram of a video encoder with deblocking filter complemented by a Wiener filter;

Figure 6    is a block diagram of a video encoder with a post filter designed by considering input signal with prediction signal, quantized prediction error signal, and decoded signal separately;

Figure 7    is a block diagram of a video decoder with a post filter being set up using obtained post filter information;

Figure 8    is a schematic drawing illustrating an example coding system with noise applied in the frequency domain.

Figure 9    is a schematic drawing illustrating an example coding system with noise applied in the frequency domain and filtering applied in the spatial domain;

Figure 10    is a schematic drawing illustrating the equivalent example coding system with both noise and filtering applied in the spatial domain;

Figure 11    is a schematic drawing illustrating the example coding system with both noise and filtering applied in the frequency domain;

Figure 12    is a graph representing the reduction of minimum mean squared error achieved by designing and applying filtering in the frequency domain rather than in the spatial domain for the example coding system;

Figure 13A    is a block diagram of a video encoder in accordance with the present invention;

Figure 13B    is a block diagram of another video encoder in accordance with the present invention;

Figure 14A    is a block diagram of a video decoder in accordance with a preferred embodiment of the present invention;

Figure 14B    is a block diagram of another video decoder in accordance with a preferred embodiment of the present invention;

Figure 15    is a block diagram of a video encoder in accordance with an embodiment of the present invention implementing an in-loop filter in the frequency domain;

Figure 16    is a block diagram of a video decoder in accordance with an embodiment of the present invention implementing an in-loop filter in the frequency domain;

Figure 17    is a block diagram illustrating example filtering in the frequency domain as applied in an encoder or a decoder according to the present invention;

Figure 18    is a block diagram of a video encoder in accordance with another embodiment of the present invention implementing a post filter in the frequency domain;

Figure 19    is a block diagram of a video decoder in accordance with another embodiment of the present invention implementing a post filter in the frequency domain;

Figure 20    is a block diagram illustrating example filtering in the frequency domain as applied in an encoder or a decoder according to the present invention;

Figure 21    is a block diagram of an example video encoder in accordance with the present invention implementing a loop filter in the frequency domain;

Figure 22    is a block diagram of an example video encoder in accordance with the present invention implementing a loop filter in the frequency domain in addition to a deblocking filter;

Figure 23    is a block diagram of an example video encoder in accordance with the present invention implementing a post filter design in the frequency domain;

Figure 24    is a block diagram of an example video decoder in accordance with the present invention implementing a post filter design in the frequency domain;

Figure 25    is a block diagram showing another example filtering in the frequency domain as applied in an encoder or a decoder according to the present invention;

Figure 26A    is a schematic drawing illustrating an example of spatially neighbouring non- overlapping blocks, which may be used for the filtering;

Figure 26B    is a schematic drawing illustrating an example of spatially neighbouring overlapping blocks, which may be used for the filtering;

Figure 27A    is a schematic drawing illustrating an example of temporally neighbouring blocks, which may be used for the filtering;

Figure 27B    is a schematic drawing illustrating another example of temporally neighbouring blocks, which may be used for the filtering;

Figure 28    is a block diagram of an example video encoder in accordance with the present invention implementing filtering of prediction signal in the frequency domain;

Figure 29    is a block diagram of an example video decoder in accordance with the present invention implementing filtering of prediction signal in the frequency domain;

Figure 30    is a block diagram of a part of an example encoder in accordance with the present invention wherein the filtering is applied to a prediction error signal or to a prediction signal;

Figure 31    is a block diagram of a part of an example encoder in accordance with the present invention wherein an IIR filtering is applied to a prediction error signal or to a prediction signal;

Figure 32    is a schematic drawing of a system with an encoder and a decoder in accordance with the present invention;

Figure 33    is a graph illustrating the results achieved by applying encoding and decoding in accordance with the present invention in comparison with state of the art encoding and decoding.

DETAILED DESCRIPTION

In accordance with the present invention, filter design and filtering of video signal is performed in the domain of spatial frequency (frequency domain). Moreover, information that is available at the encoder side but not at the decoder side is provided together with encoded video data in order to enable a decoder setting up the filtering appropriately. At a decoder in accordance with the present invention, a filter is set-up and the filtering is applied in the frequency domain block-wise.

Designing a filter for filtering the video signal and filtering in the frequency domain is especially advantageous in case that the noise is added in the frequency domain, too. This is indeed the case for the majority of today's video encoding methods that quantize and transmit/store video signal transformed in the frequency domain.

In the following, the advantage of a Wiener filter operating in the frequency domain compared to a Wiener filter operating in the spatial domain is demonstrated for an example coding system encoding an one dimensional signal with two samples.

Figure 8 shows the considered example coding system, which employs quantization in the frequency domain. Signal $s$ enters the transformation 810. The here-applied transformation 810 is a one-dimensional discrete cosine transformation (DCT) with block size of 2. Accordingly, two consecutive samples $s(x)$ and $s(x+1)$ of the signal $s$ are transformed into the frequency domain by the use of such DCT 810. The resulting two transformation coefficients $c_1$ and $c_2$ are given by

$$\begin{pmatrix} c_1 \\ c_2 \end{pmatrix} = \frac{1}{\sqrt{2}}\begin{pmatrix} 1 & 1 \\ 1 & -1 \end{pmatrix} \cdot \begin{pmatrix} s(x) \\ s(x+1) \end{pmatrix}.$$

The transformation coefficients $c_1$ and $c_2$ are quantized independently resulting in the quantized transformation coefficients $c_1'$ and $c_2'$, which may thus be expressed as a sum of transformation coefficients $c_1$ and $c_2$ and noise $n_1$ and $n_2$, the noise $n_1$ and $n_2$ corresponding in this example to the quantization noise:

$$\begin{pmatrix} c_1' \\ c_2' \end{pmatrix} = \begin{pmatrix} c_1 \\ c_2 \end{pmatrix} + \begin{pmatrix} n_1 \\ n_2 \end{pmatrix}.$$

The reconstructed samples $s'(x)$ and $s'(x+1)$ are obtained by the inverse DCT transformation 820 applied to the quantized transformation coefficients $c_1'$ and $c_2'$:

$$\begin{pmatrix} s'(x) \\ s'(x+1) \end{pmatrix} = \frac{1}{\sqrt{2}} \begin{pmatrix} 1 & 1 \\ 1 & -1 \end{pmatrix} \cdot \begin{pmatrix} c_1 + q_1 \\ c_2 + q_2 \end{pmatrix} = \begin{pmatrix} s(x) \\ s(x+1) \end{pmatrix} + \frac{1}{\sqrt{2}} \begin{pmatrix} 1 & 1 \\ 1 & -1 \end{pmatrix} \cdot \begin{pmatrix} n_1 \\ n_2 \end{pmatrix}.$$

Since the discrete cosine transform is a unitary transform, the mean squared quantization error $E[(s-s')^2]$ in the spatial domain is the same as the mean squared quantization error $E[(c-c')^2]$ in the transformation (frequency) domain, which results for the example above in

$$E\left[(s - s')^2\right] = \frac{1}{2} \cdot \sum_{i=1}^{2} E\left[(c_i - c_i')^2\right].$$

In the following, the noise reduction by a Wiener filter in the frequency domain is compared to the noise reduction by a Wiener filter in the spatial domain. In order to keep the comparison simple, the following assumptions are made. The two components $n_1$ and $n_2$ of the noise are zero mean and pair wise uncorrelated with the transformation coefficients $c_1$ and $c_2$. Signal $s$ is zero mean and at least wide sense stationary. Based on these assumptions, the first two moments of the quantization noise signal are:

$$E[n_1] = E[n_2] = 0,$$

$$E\left[n_1^2\right] = \sigma_{n_1}^2,$$

it is further assumed that there is no quantization applied to the transformation coefficient $c_2$

$$E\left[n_2^2\right] = \sigma_{n_2}^2 = 0,$$

the first two moments for components $s(x+i) = s_i$ of signal $s$ for each $i = 0,1,2,...$ are:

$$E[s_i] = 0,$$

$$E[s_i^2] = \sigma_s^2,$$

and the joint moments of the transformed signal $s$ and noise are

$$E[c_1 \cdot n_1] = E[c_1 \cdot n_2] = E[c_2 \cdot n_1] = E[c_2 \cdot n_2] = 0.$$

The correlation coefficient of two arbitrary consecutive samples $s_i$ and $s_{i+1}$ of the signal $s$ is

$$\rho = \frac{E[s_i \cdot s_{i+1}]}{\sigma_s^2}.$$

The noise reducing Wiener filter has the filter length of one and thus, only one filter coefficient. This coefficient is denoted $h_s$ in the case of filtering in the spatial domain and $h_c$ in the case of filtering in the frequency domain.
With these assumptions, the variances of the transformation coefficients $c_1$ and $c_2$ are given by

$$E[c_1^2] = \sigma_{c_1}^2 = \sigma_s^2 \cdot (1 + \rho),$$

$$E[c_2^2] = \sigma_{c_2}^2 = \sigma_s^2 \cdot (1 - \rho).$$

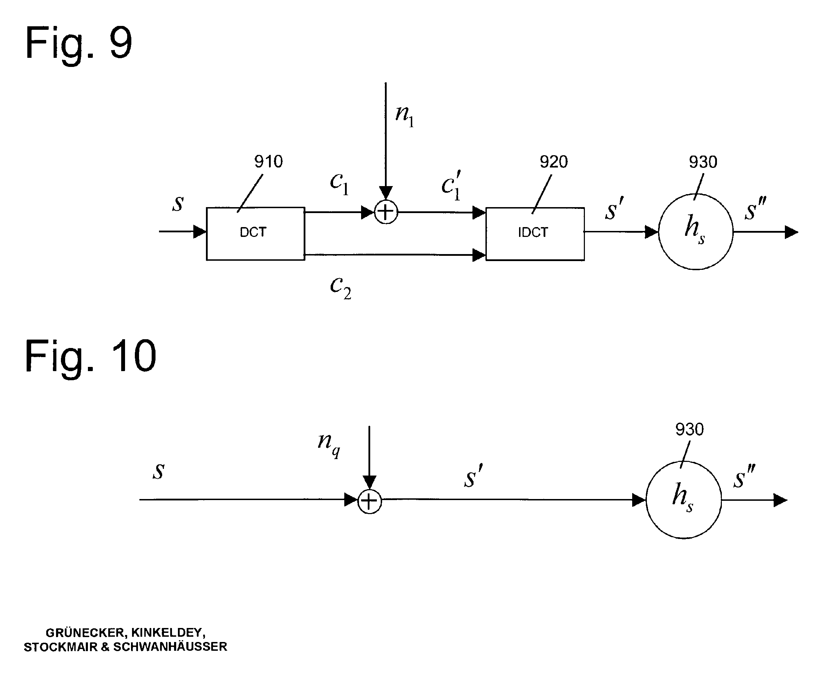

Figure 9 illustrates a corresponding coding system with quantization in the frequency domain and with a noise reducing Wiener filter with one filter coefficient in the spatial domain. The coding system, comprising a transformation 910, quantization and an inverse transformation 920 has been simplified by applying the above assumptions and by using a noise reducing Wiener filter 930 with only one coefficient $h_s$ in the spatial domain.
Due to the quantization of the transformation coefficient $c_1$, the mean squared error between the input signal $s$ and the signal $s'$ after filtering is

$$\sigma_q^2 = E[(s - s')^2] = \frac{1}{2} \cdot (\sigma_{n_1}^2 + \sigma_{n_2}^2) = \frac{\sigma_{n_1}^2}{2}.$$

The coding system shown in Figure 10 is equivalent to the coding system shown in Figure 9. A noise signal $n_q$ of zero mean, variance $\sigma_q^2 = \dfrac{\sigma_{n_1}^2}{2}$ and correlation $E[s \cdot n_q] = 0$, which is equivalent to the noise $n_1$ inserted in the frequency domain, is added to the signal $s$ in the spatial domain.

The filter coefficient $h_s$, that minimizes the mean squared error between the input signal $s$ and the signal $s''$ after filtering, which means that $E[s\text{-}s'')^2] \to$ min, can be calculated by setting the following derivative to zero:

$$\frac{dE\left[(s-s'')^2\right]}{dh_s} = \frac{dE\left[\left(s-\left(s+n_q\right)\cdot h_s\right)^2\right]}{dh_s} = 0 \ .$$

Solving of the above equation provides the optimum value of filter coefficient $h_s$ that minimizes the mean squared error as follows

$$h_s = \frac{\sigma_s^2}{\sigma_s^2 + \sigma_q^2}$$

The corresponding minimum mean squared error between the signal $s$ and the signal $s''$ after the noise reducing Wiener filtering using the optimum value of filter coefficient $h_s$ in the spatial domain is given by

$$MSE_{Spatial} = E\left[(s-s'')^2\right] = \sigma_s^2 \cdot \left(1-h_s^2\right) + h_s^2 \cdot \sigma_q^2 = \sigma_s^2 \cdot \left(1-h_s^2\right) + \frac{1}{2} \cdot h_s^2 \cdot \sigma_{n_1}^2 \ .$$

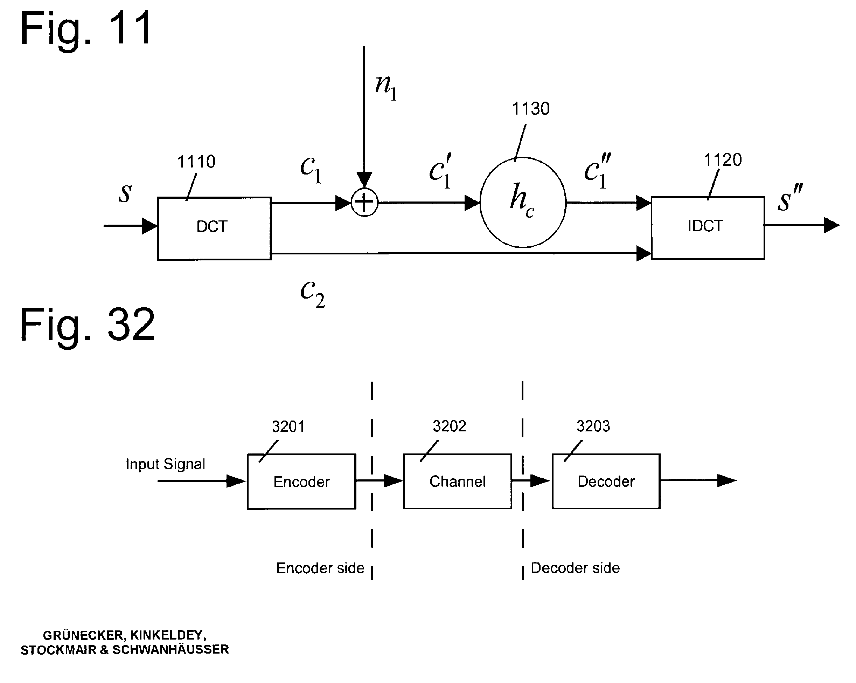

Figure 11 shows a coding system applying quantization in the frequency domain after transformation 1110 and applying a noise reducing Wiener filter 1130 with one coefficient $h_s$ in after the transformation (in the frequency domain). The inverse transformation 1120 is performed after filtering 1130.

Due to the quantization of the transformation coefficient $c_1$ and under the same above assumptions, the mean squared error between the transformed signal $c_1$ and the transformed quantized signal $c_1'$ is $\sigma_{n_1}^2$.

The filter coefficient $h_c$ of the Wiener filter 1130 that minimizes the mean squared error between the transformed signal $c_1$ and the transformed quantized signal $c_1''$ after filtering, which means that $E\left[(c_1-c_1'')^2\right] \to \min$, can be calculated by setting the following derivative term to zero:

$$\frac{dE\left[(c_1-c_1'')^2\right]}{dh_c} = \frac{dE\left[\left(c_1-\left(c_1+n_1\right)\cdot h_c\right)^2\right]}{dh_c} = 0 \ .$$

Solution of the above equation provides the optimum value of the filter coefficient $h_c$, which minimizes the mean squared error:

$$h_c = \frac{\sigma_{c_1}^2}{\sigma_{c_1}^2 + \sigma_{n_1}^2} \ .$$

The corresponding minimum mean squared error between the signal $c_1$ and the signal $c_1''$ filtered by the Wiener filter with the optimum filter coefficient $h_c$ is given by:

$$E\left[(c_1 - c_1'')^2\right] = \sigma_{c_1}^2 \cdot \left(1 - h_c^2\right) + h_c^2 \cdot \sigma_{n_1}^2.$$

Accordingly, the minimum mean squared error between the signal $s$ and the signal $s''$ with the noise reducing Wiener filter 1130 in the frequency domain is

$$MSE_{Frequency} = E\left[(s - s'')^2\right] = \frac{1}{2} \cdot \sigma_{c_1}^2 \cdot \left(1 - h_c^2\right) + \frac{1}{2} \cdot \sigma_{n_1}^2 \cdot h_c^2 = \frac{1}{2} \cdot \sigma_s^2 \cdot (1 + \rho) \cdot \left(1 - h_c^2\right) + \frac{1}{2} \cdot \sigma_{n_1}^2 \cdot h_c^2.$$

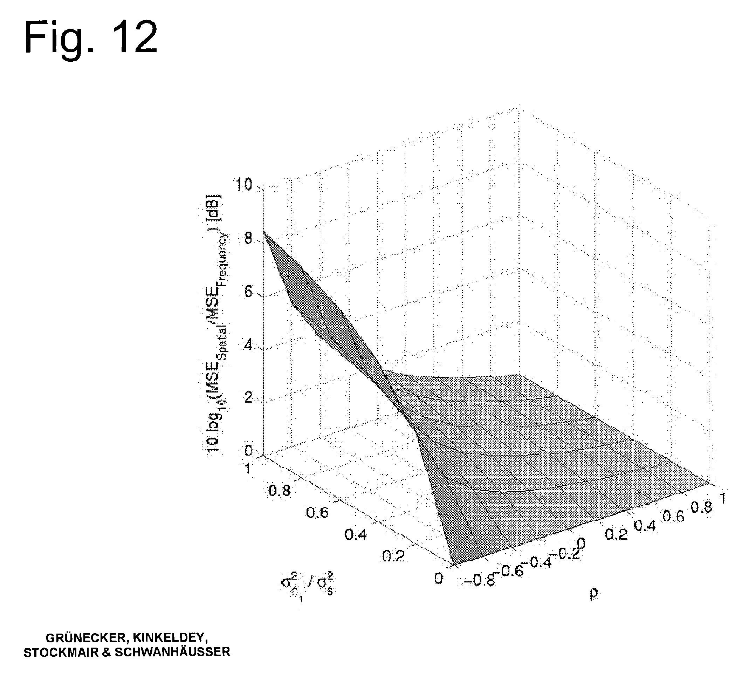

Figure 12 provides comparison between the minimum mean squared error resulting from filtering in the spatial domain and the minimum mean squared error resulting from filtering in the frequency domain for the above examples. The graph shows the reduction

$$10 \cdot \log_{10} \frac{MSE_{Spatial}}{MSE_{Frequency}}$$

of the minimum mean squared error in dB that is achieved by the noise filtering in the frequency domain 1130 compared to the noise filtering 930 in the spatial domain with respect to the value of the correlation coefficient ρ and to the variance of the quantization noise $n_1$ normalized by the variance of the signal $s$. As can be seen from the graph for this example, the mean squared error can be reduced in all cases where the correlation coefficient p is unequal to 1 and the variance of quantization noise is larger than zero.

This example for a one-dimensional signal with two samples thus demonstrates that filtering in the domain where the noise has been inserted results in reduced mean squared error.

Based on these considerations, the present invention provides an encoder and a decoder, a method for encoding and a method for decoding of video signal, wherein the filter design and the filtering is performed in the frequency domain.

At the encoder side, the filter design is performed in frequency domain and filter data for filtering the video signal in the frequency domain are provided to the decoder side. At the decoder, the filter is set up and applied block-wise in the frequency domain.

In order to ensure similar operation of the encoder and the decoder, in accordance with a preferred embodiment of the present invention, the filter information is provided at the encoder together with the encoded video data. The decoder is capable of obtaining the filter information and to set up the filter characteristics accordingly.

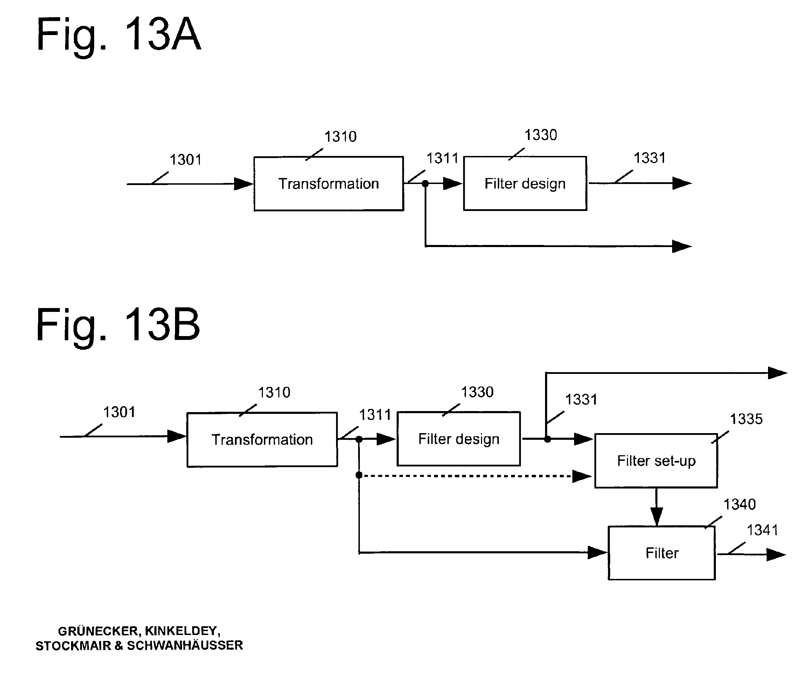

Figures 13A and Figure 13B schematically illustrate two example encoders in accordance with the present invention. Accordingly, a video signal 1301 is transformed 1310 into the frequency domain. The video signal 1301 here refers to a two-dimensional signal such as pixel values or prediction error values if predictive coding is applied. The transformation for transforming the video signal into the frequency domain can be any transformation such as Fourier, discrete cosine, Karhunen-Loève transformation, or any fast and/or integer version of such transformations. A transformed video signal 1311 is then used for filter design 1330 including determining filter data for filtering of the video signal in the frequency domain. Such filter data may be filter coefficients and/or offset of the video signal in frequency domain. However, it may also be any statistical information related to the transformed video signal in the frequency domain that can be used to calculate the filter coefficients and/or set-up the filter. The filter data may also be determined based on a quantized and non-quantized transformation coefficients, if quantization is applied after the transformation (either as a part of the transformation or the filter design). The filter data 1331 are then provided to a decoder side. Hereby, the advantage of providing the filter data 1331 to the decoder side is the possibility of providing a decoder with an information for setting-up the filter that cannot be obtained by the decoder itself. Such information is, for instance, information related to a video signal before any lossy compression has been made. Both, the filter data 1331 and the transformed video signal 1311 may be further encoded. The filter design unit 1330 preferably also uses the encoded and/or compressed video signal in the frequency domain to determine the filter data as will be explained with respect to particular embodiments of the present invention. The encoder in Figure 13B includes, in addition, a filter 1340 applied to the transformed video signal 1311. The filter 1340 is set up 1335 based on the filter data 1331. The setting-up the filter 1340 includes providing to the filter parameters such as filter coefficients, video signal offsets, which define the filtering operation to be performed. These parameters are either obtained with the filter data or calculated based on the filter data 1331 and possibly also based on the transformed video signal 1311.

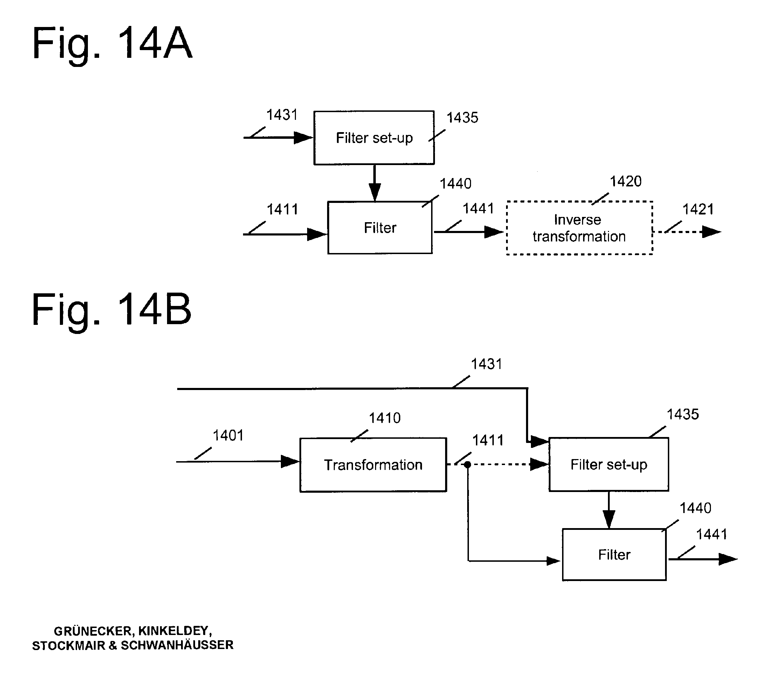

Figures 14A schematically illustrate two example decoders in accordance with the present invention. Filter data 1431 and a video signal input the encoder. The filter data are provided by the encoder side, for instance by one of the encoders shown in Figures 13A and 13B. The filter data 1431 is used to set up 1435 a filter 1440, which is used to filter the video signal 1411 in the frequency domain. If the video signal 1401 entering the encoder is not in the frequency domain, it has to be first transformed 1410 as shown in Figure 14B. Setting up the filter 1435 may be again performed using also the transformed video signal 1411. The filtered video signal in frequency domain may be inversely transformed 1420 to the spatial domain, or may be further processed. However, setting up the filter 1440 may be performed without obtaining or considering the filter data. The filtering is applied block-wise.

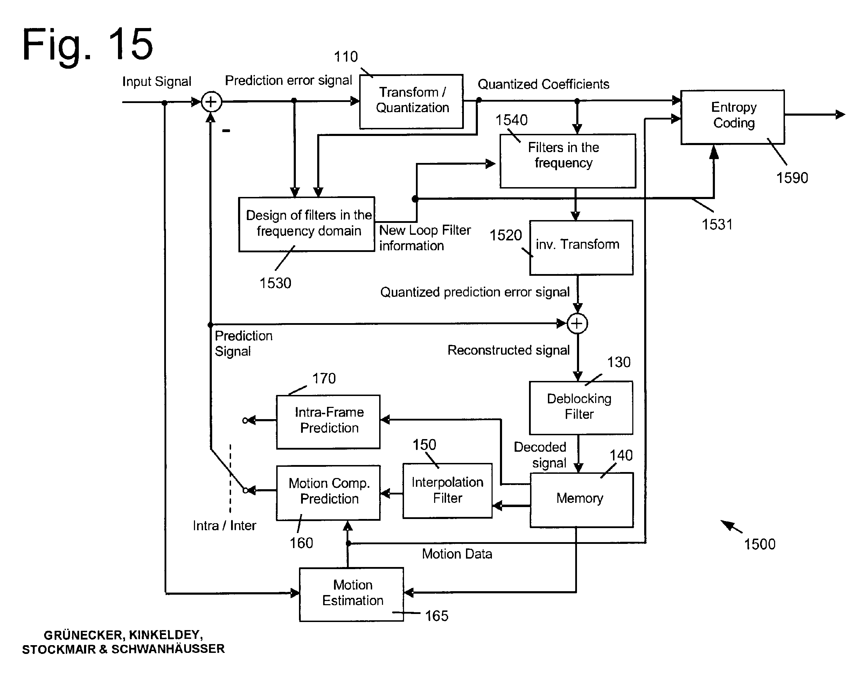

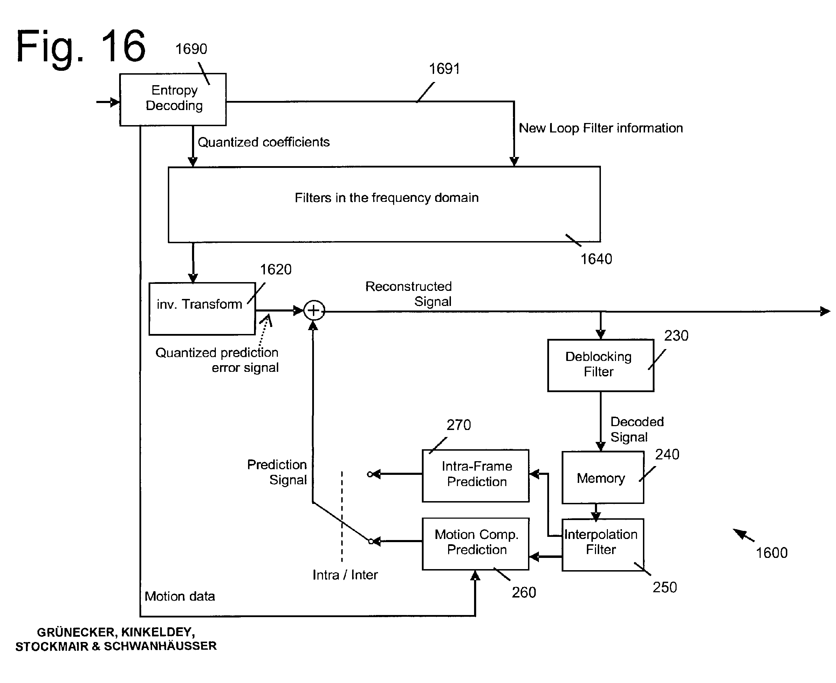

In accordance with an embodiment of the present invention, the filter design and filtering in the frequency domain is employed for loop filtering. Figure 15 and Figure 16 illustrate examples of such encoder 1500 and decoder 1600, respectively.

Based on the (transformed) prediction error signal and on the corresponding quantized transformation coefficients, filter design unit 1530 estimates the filter coefficients which are used by the frequency filter 1540 to filter the quantized transformation coefficients. The filter coefficients may then be provided to the entropy encoder 1590 within the new loop filter information 1531 for encoding. However, it may not be necessary to provide/encode the filter coefficients themselves. The new loop filter information 1531 should in general comprise the information necessary to set up the filter at the decoder side in a similar way as at the encoder 1500. It may be any information enabling decoder to determine the filter coefficients. The entropy encoder 1590 may use an integer variable length code such as Exp-Golomb, Golomb, unitary code or a code designed taking into account the particular statistics of the new loop filter information to be encoded. The encoded new loop filter information is then provided together with the other encoded video data to the decoder side. The filtered transformation coefficients at the encoder are inversely transformed 1520 to obtain the filtered and quantized prediction error signal.

At the decoder 1600, new loop filter information 1691 is decoded by an entropy decoder 1690 and provided to the filtering unit 1640, which comprises a filter design unit and a filter. The filter design unit is necessary to calculate the filter coefficients based on the new loop filter information in case they are not directly provided by the encoder. The filter is the set up using the so calculated filter coefficients or directly from the entropy decoder 1690 obtained filter coefficients and possibly other necessary data obtained within the new loop filter information. The quantized transformation coefficients are then filtered by the filter 1640 and inversely transformed 1620 resulting in the corresponding filtered and quantized prediction error signal values, which are further added to the prediction signal to obtain the reconstructed signal. The reconstructed signal may further be filtered, for instance, by a deblocking filter 230.

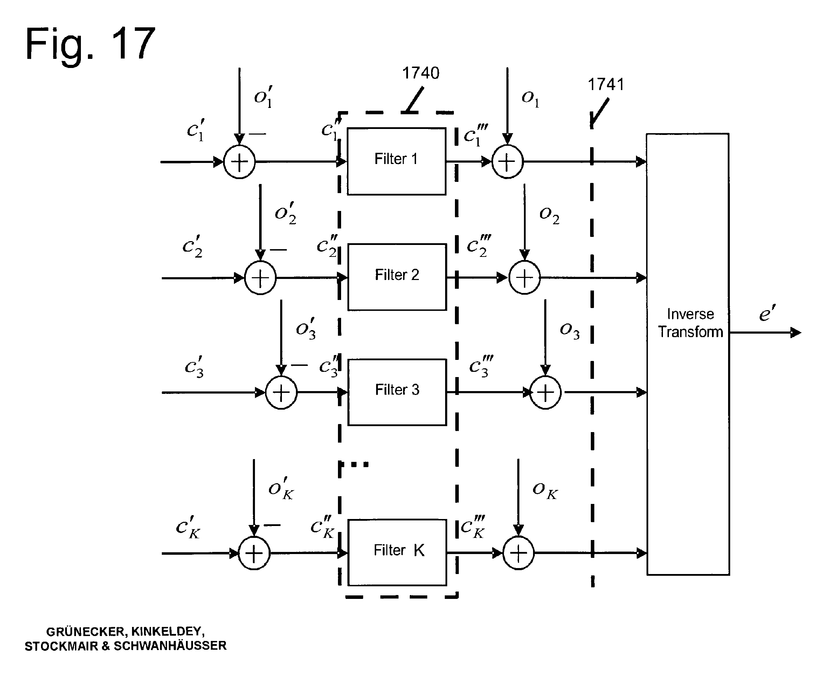

Figure 17 shows the details of the example filtering 1540, 1640 in the frequency domain employed in the encoder 1500 and/or decoder 1600. From the $K$ quantized transformation coefficients $c'_1, \ldots, c'_K$, individual offsets $o'_1, \ldots, o'_K$ are subtracted resulting in the transformation coefficients $c''_1, \ldots, c''_K$ without offset. Preferably, the offsets $o'_1, \ldots, o'_K$ correspond to the mean values $E[c'_1], \ldots, E[c'_K]$ of the respective quantized transformation coefficients $c'_1, \ldots, c'_K$. Each transformation coefficient $c''_1, \ldots, c''_K$ is then filtered 1740 with an individual filter (cf. Filter 1 to Filter K in Figure 17) resulting in $K$ filtered transformation coefficients $c'''_1, \ldots, c'''_K$. After filtering, to each of the $K$ filtered transformation coefficients $c'''_1, \ldots, c'''_K$, a respective individual offset $o_1, \ldots, o_k$ is added. The offsets $o_1, \ldots, o_K$ are preferably the mean values of the transformation coefficients $c_1, \ldots, c_k$ of the original prediction error signal $s$. The resulting transform coefficients 1741 are inversely transformed 1520 or 1620. The output signal e' after inverse transformation 1520, 1620 corresponds to quantized and filtered prediction error values (residuals).

At the encoder 1500, the filter coefficients $w_{1,k}, \ldots, w_{M,k}$ for filtering of each of the $K$ transformation coefficients ($k = 1, \ldots, K$) with a filter of $M$ th order (given by the $M$ filter coefficients) are calculated, for instance, as a Wiener filter. In order to allow the decoder 1600 to perform the same filtering as 1500, the new loop filter information 1531 contains the offsets $o_1, \ldots, o_K$ and the filter coefficients $w_{1,k}, \ldots, w_{M,k}$. Alternatively to sending the filter coefficients, information necessary for obtaining the filter coefficients may be sent, which cannot be obtained at the decoder 1600. Such information is any information related to the input transformation coefficients $c_1, \ldots, c_k$ before quantization which can be used to calculate the filter coefficients $w_{1,k}, \ldots, w_{M,k}$. In case of the Wiener filter design, for instance, a cross correlation vector between the input transformation coefficients and the filtered transformation coefficients may be sent, or autocorrelation of the noise, etc. Providing the offsets $o_1, \ldots, o_K$ together with the encoded video signal improves the quality after the filtering.

However, implementations of the present invention without sending the offsets $o_1,...,o_K$ are also possible.

In this example, the filter order $M$ is equal for the individual coefficient filters for filtering of individual transformation coefficients. However, it may be an advantage if the filter order for filtering different transformation coefficients differs. The particular filter orders $M_1,...,M_K$ for different transformation coefficients may then be fixed (default or set within the encoder/decoder settings), or signalized together with the filter information.

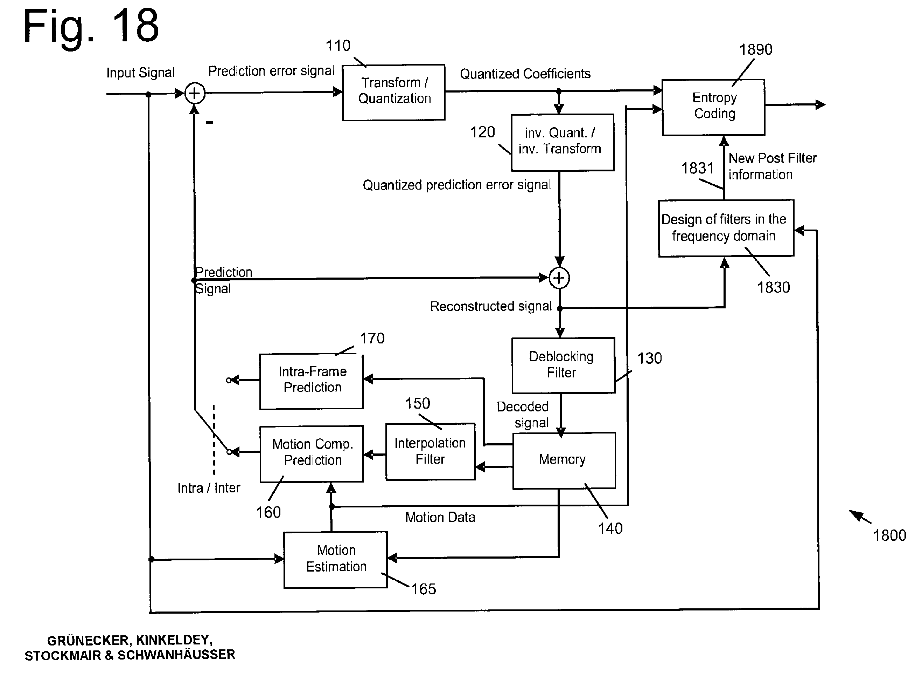

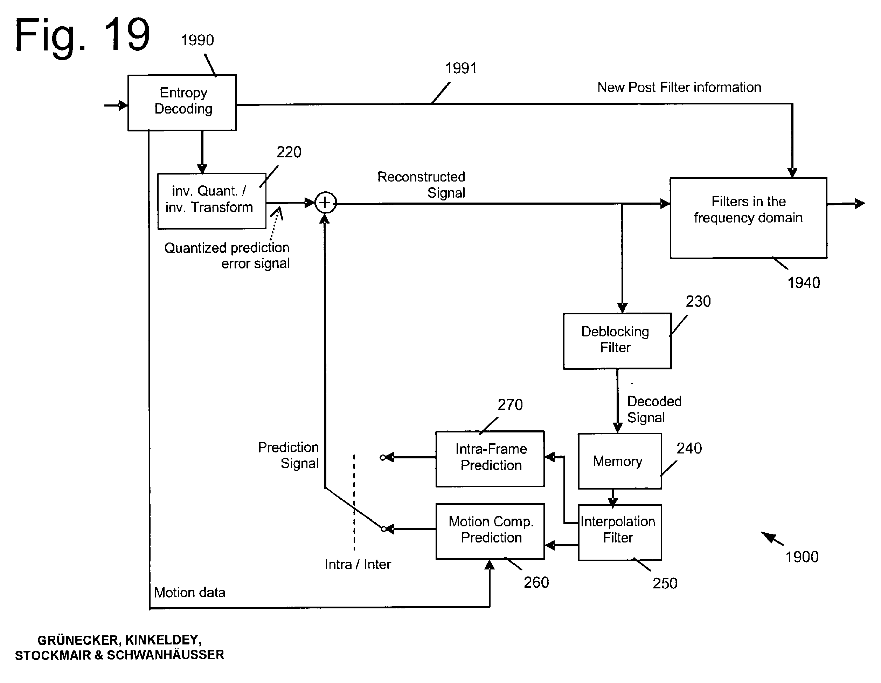

In accordance with another embodiment of the present invention, the filter design and filtering in the frequency domain is applied to a post filter, which operates on the reconstructed image/video signal. Figure 18 and Figure 19 illustrate such an encoder 1800 and a decoder 1900, respectively.

The filter design unit 1830 for designing the post filter in the frequency domain implemented within the encoder 1800 provides new post filter information 1831 to an entropy encoder 1890. The new post filter information 1831 here may contain directly the filter coefficients, or any other information, which enables decoder to calculate the post filter coefficients. At the encoder side, post filtering does not need to be applied since it is not used in the prediction loop. The post filter design unit 1830 calculates the filter coefficients or the other relevant information to be provided based on the input signal and on the reconstructed signal. The filter coefficients may be estimated, for instance, as Wiener filter coefficients, or, alternatively, statistical data such as cross correlation between the input signal and the reconstructed signal, autocorrelation of the noise, or correlation between the noise and the signal may be provided.

At the decoder 1900, new post filter information 1991 provided by the encoder together with the encoded video data is decoded by an entropy decoder 1990. The filtering unit 1940 is capable of obtaining the new post filter information 1991 and the reconstructed video signal and of setting up the filter, by which the reconstructed signal is thus filtered.

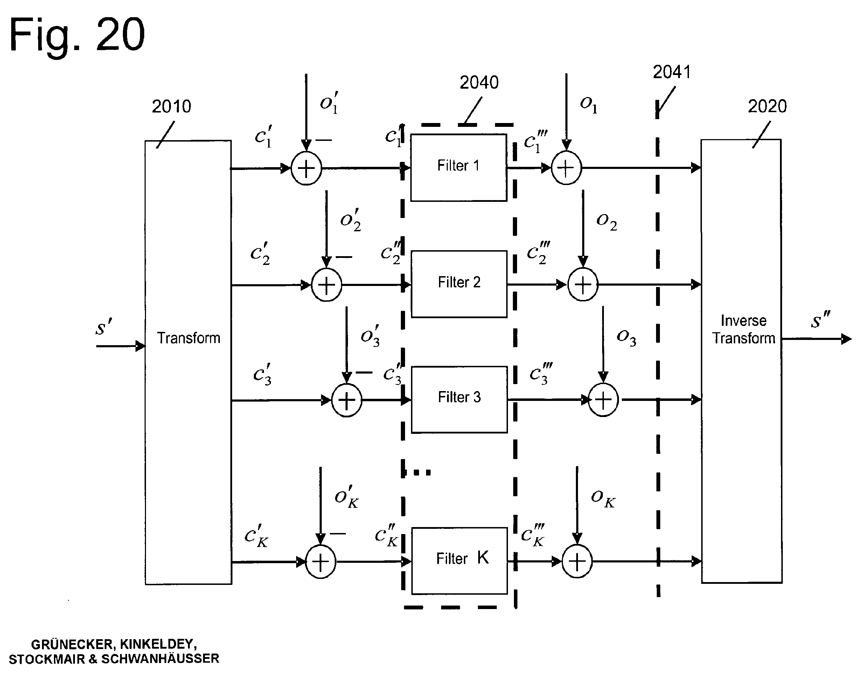

Figure 20 illustrates details of an example post filtering 1940 in the frequency domain for this embodiment of the present invention. The reconstructed signal $s'$ is transformed 2010 into the frequency domain. Preferably, the same transformation 110 is used as in the encoder 1800 for the coding of the prediction error. This may simplify possible software and/or hardware implementation. However, a different transformation may also be used, differing from the encoder's transformation 110, for instance, by the basis functions and/or size. The transformation may also be selected as a part of the filter design 1830 and the selected transformation may be provided to the decoder together with the encoded video data. The selection may be performed out of the predefined set of tra\nsformations, or, alternatively, the entire transformation matrix may be determined and signalized.

The transformation 2010 transforms the input reconstructed signal $s'$ into $K$ transformation coefficients $c'_1,\ldots,c'_K$. From the $K$ transformation coefficients $c'_1,\ldots,c'_K$, individual offsets $o'_1,\ldots,o'_K$ are subtracted, resulting in the transformation coefficients $c''_1,\ldots,c''_K$. Again, the offsets $o'_1,\ldots,o'_K$ are preferably the mean values of the corresponding transformation coefficients $c'_1,\ldots,c'_K$. Each such transformation coefficient $c''_1,\ldots,c''_K$ after subtracting the offset is filtered 2040 with an individual filter resulting in the $K$ transformation coefficients $c'''_1,\ldots,c'''_K$. To each of the $K$ filtered transformation coefficients $c'''_1,\ldots,c'''_K$, an individual offset $o_1,...,o_K$ is added. The offsets $o_1,...,o_K$ correspond preferably to the mean values of the transformation coefficients $c_1,...,c_K$ of the original input signal. The resulting transformation coefficients 2041 are inverse transformed 2020. The output signal $s''$ represents the filtered reconstructed image/video signal.

Similarly as in the previously described embodiment of the present invention, the filter coefficients $w_{1,k},...,w_{M,k}$ and the offsets $o_1,..., o_K$ are preferably entropy coded 1890 and provided from the encoder to the decoder. In addition, the transformation information signalizing the transformation 2010 and/or the inverse transformation 2020 to be applied may be transmitted from the encoder to the decoder. Such transformation information may either be a designation of one of the transformations forming a predefined fixed set of allowed transformations. Alternatively, the transformation and/or the inverse transformation matrix may be signalized. Other possibilities, such as implicit determination of the transformation based on the received video data, may also be implemented. The term video data refers to all syntax elements transmitted together with the encoded quantized transformation coefficients and necessary for the correct decoding of the video sequence.

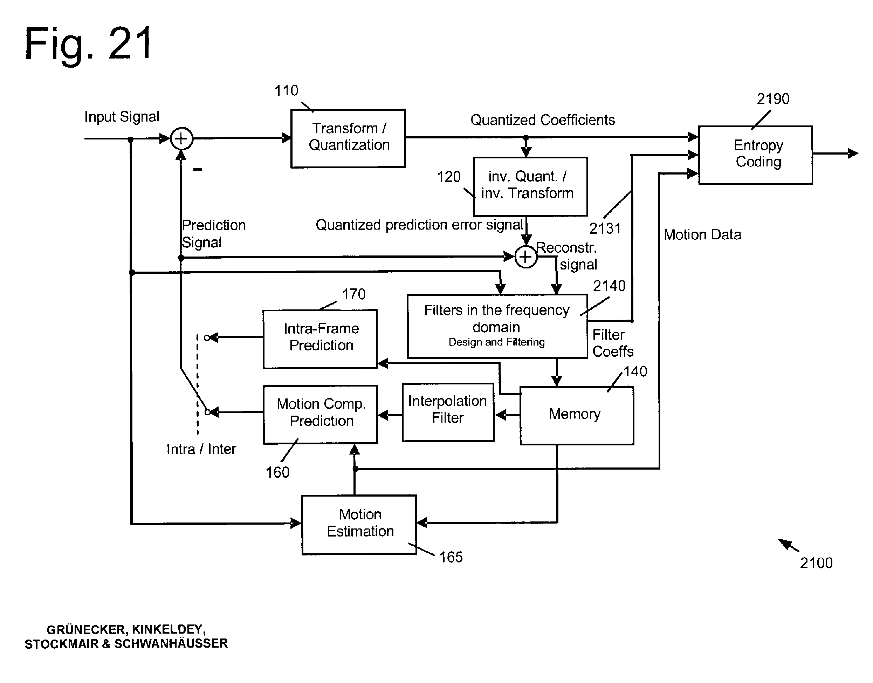

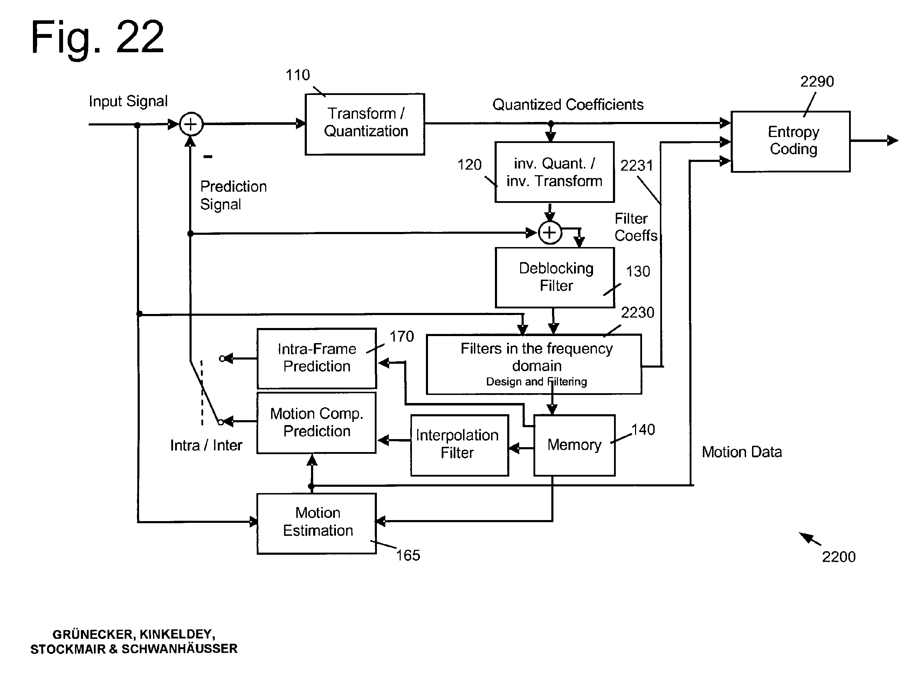

In accordance with yet another embodiment of the present invention, the filtering in the frequency domain is applied to the reconstructed video signal. Figure 21 and Figure 22 exemplify such encoders 2100 and 2200. The actual filtering may be performed, for instance, in accordance with the filter shown in Figure 20.

In particular, Figure 21 illustrates the encoder 2100 with deblocking filter 130 being replaced by the loop filter unit 2140. The loop filter unit 2140 comprises a filter design unit and a filter. The coefficients of the filter are calculated in the frequency domain based on the input video signal (desired signal) and on the reconstructed video signal. Filter information 2131 is then provided to the entropy encoder 2190 for encoding.

Figure 22 illustrates the encoder 2200 with a loop filtering 2230 operating in addition to and after the deblocking filter 130. Filter design unit 2230 provides the entropy encoder 2290 with filter information 2231such as filter coefficients, calculated in the frequency domain based on the input (desired) video signal and the reconstructed and de-blocked video signal.

The decoders corresponding to the encoders such as 2100 and 2200 with loop filter in the frequency domain have basically the similar functional blocks for filtering as the encoders. The filter design is performed based on the obtained filter information and/or the information calculated locally. After setting up the filter, the reconstructed video signal is filtered in the frequency domain.

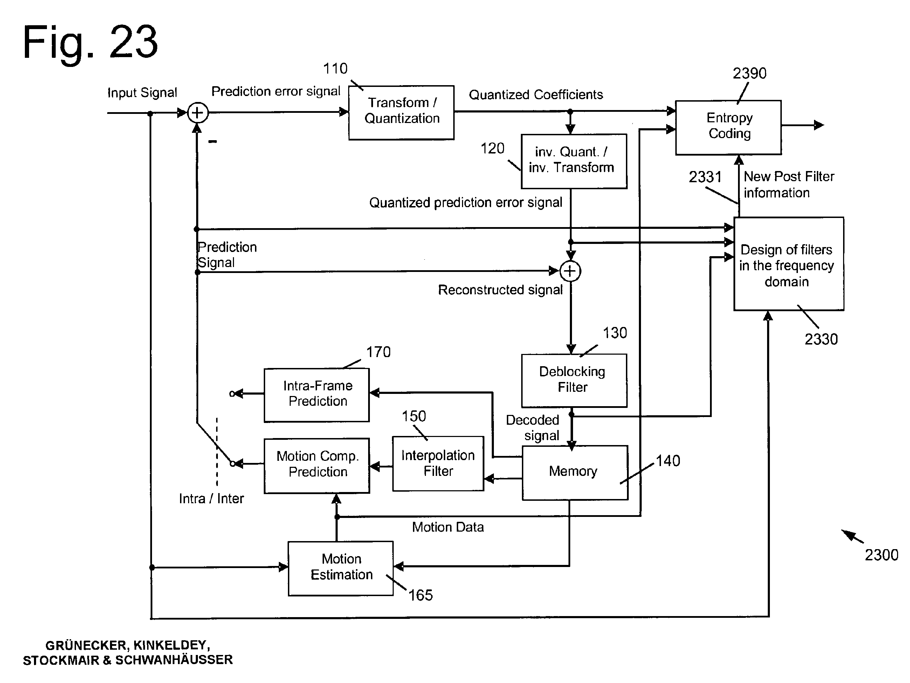

In accordance with still another embodiment of the present invention, the prediction signal, the quantized prediction error signal, and the reconstructed signal are considered separately in the filtering (design) process. Figure 23, Figure 24, and Figure 25 exemplify such filtering process.

Figure 23 shows the encoder 2300 with a post filter design unit 2330, which determines the filter information in the frequency domain based on input (desired) video signal, prediction signal, quantized prediction error signal and the decoded (reconstructed and de-blocked) video signal. Such filter information 2331 is then provided to the entropy encoder 2390.

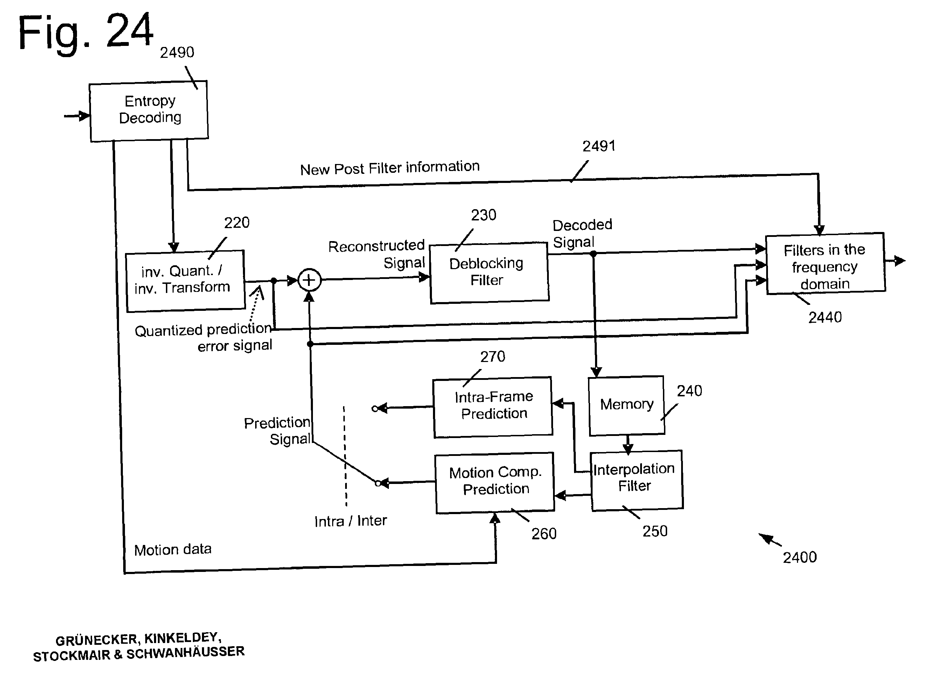

Figure 24 shows the decoder 2400 corresponding to the encoder 2300. Entropy decoder 2490 decodes the filter information 2491 and provides it to the filtering unit 2440. The filtering unit 2440 sets up the post filter and applies it to the decoded signal. Setting up the filter may here also include the filter design similar to filter design 2330 at the encoder side, especially in case that instead of the filter coefficients the information necessary for their calculation is provided.

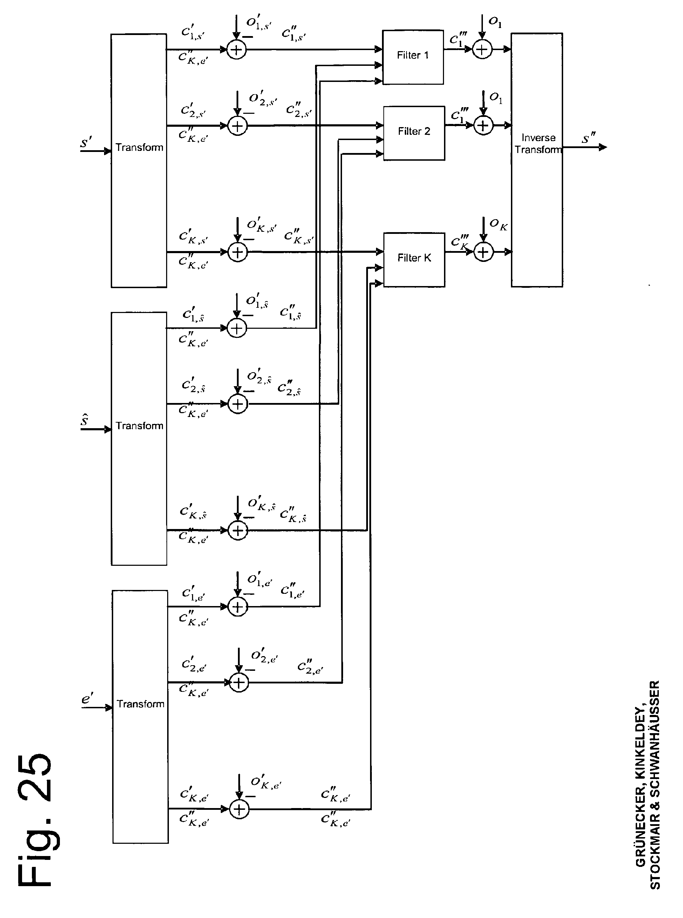

Figure 25 shows an example filtering in the frequency domain applicable to this embodiment of the present invention where the prediction signal $\hat{s}$, the quantized prediction error signal $e'$, and the reconstructed signal $s'$ are considered separately for the filtering.

In the following, the example of filter design 1530, 1640, performed at the encoder such as 1500 and/or decoder 1600 is shown. The filter characteristics obtained by such filter design are the applied to the filtering 1540, 1640 shown in details in Figure 17.

In order to adjust the mean values of the transformation coefficients $c'_1 \ldots, c'_K$ of the quantized prediction error signal and the mean values of the transformation coefficients $c_1, \ldots, c_K$ of the original prediction error signal, denoted here as $e$, a mean adjustment is performed as already briefly described with reference to Figure 17. For this purpose, the offsets $o'_1, \ldots, o'_K$ are calculated as $o'_k = E[c'_k]$, with $k=1, \ldots, K$. The offsets $o_1, \ldots, o_K$ are calculated as $o_k = E[c_k]$, with $k = 1, \ldots, K$. The calculating here refers to estimating the mean of the quantized prediction error signal and the mean of the original prediction error signal, for instance as an average over a plurality of corresponding samples.

The optimization criterion for the design of the $K$ individual filters for the respective transformation coefficients in the frequency domain is the minimum mean squared error between the desired signal $c_1 - o_1, \ldots, c_K - o_K$, which corresponds to the transformation coefficients of the original prediction error signal $e$ without offset signal $o_1, \ldots, o_K$, and the filtered signal $c''_1, \ldots, c''_K$. The linear filtering is to be performed as follows:

$$c''_k = \sum_{m=1}^{M} w_{k,m} \cdot c''_{k,m} \, ,$$

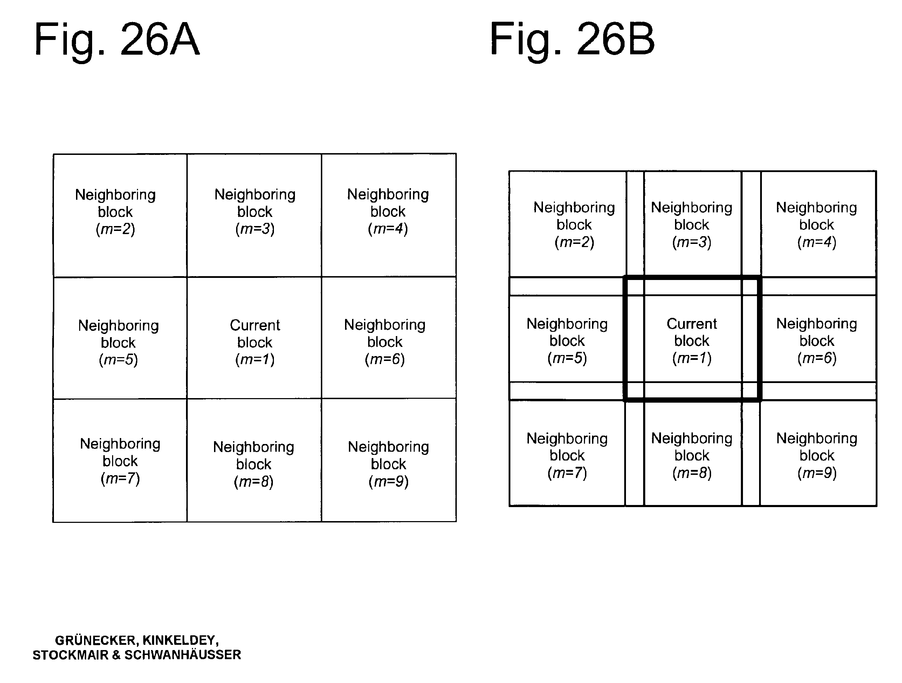

wherein $w_{k,1}, \ldots, w_{k,M}$ are $M$. $K$ filter coefficients of the $K$ individual filters in the frequency domain, one filter of order $M$, i.e., with $M$ filter coefficients for each frequency component. Each such individual filter weights $M$ transformation coefficients $c''_{k,m}$ of the same frequency component in $M$ blocks placed, for instance, as illustrated in Figure 26A and 26B.

In particular, Figure 26A shows a non-overlapping arrangement of nine blocks, the transformation coefficients of which are used in filtering. However, it may be an advantage to use transformation coefficients of overlapping blocks as the correlation between them may be higher. An arrangement with blocks overlapping symmetrically is shown in Figure 26B. However, the blocks may overlap asymmetrically by areas of different sizes. The way of overlapping may be chosen, for instance, according to the characteristics of the blocks. Moreover, the overlapping may be maximized by shifting the neighboring blocks by a single pixel (or even a sub-pixel) with respect to the current block. In such case, a plurality of filtered signal representations would be obtained, that may be further arbitrarily selected and/or combined to obtain the desired filtered image.

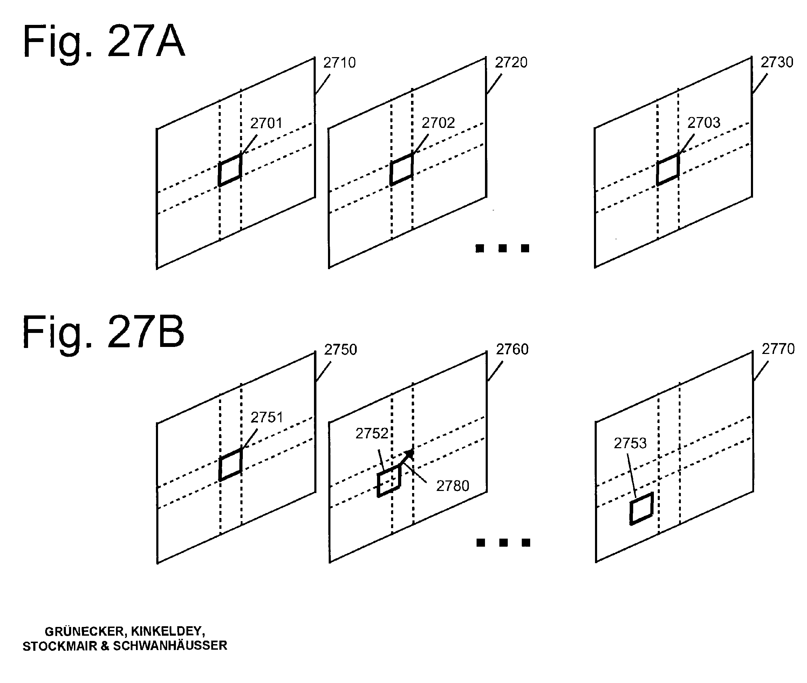

Alternatively, the filtering may weight the transformation coefficients corresponding to the same frequency of blocks neighbouring to the current block in the time axis, i.e. the blocks in previous and/or the following frames. Two examples of such neighbouring blocks are illustrated in Figure 27A and 27B, respectively.

Figure 27A illustrates frame 2710 containing a current block 2701. The block 2702 temporally adjacent to the current block 2701 is in the frame 2720 temporally adjacent to frame 2710. Other temporally neighbouring blocks from other temporally neighbouring frames can be considered for filtering, up to $M$-th block 2703 within the $M$-th frame 2730. In this example, the temporally neighbouring blocks 2701, 2702, ..., 2703 are placed in the same position within different frames of a video sequence.

Figure 27B illustrates another example of frame 2750 comprising a current block 2751 and the block 2752 temporally adjacent to the current block 2751. Block 2752 within the frame neighbouring to the frame 2750, is obtained by motion estimation. A motion vector 2780 indicates the motion, which the best matching block 2752 in the frame 1760 underwent to become current block 2751 in the frame 2750. Thus, in this example, the temporally neighbouring blocks are the blocks obtained using motion estimation, i.e. finding the best matching block 2752 for the current block 2751 in the neighbouring frame 2760. The blocks (e.g. block 2753) in other neighbouring frames (e.g. frame 2770) may be found either as the best match for the current block 2751, or as a best match for another neighbouring block of the current block such as 2752 within a neighbouring frame.

Applying motion compensation for determining the neighbouring blocks used in filtering as shown in Figure 27B provides the set of neighbouring blocks with statistics more similar than those of the example in Figure 27A. In general, the temporally neighbouring blocks for filtering are not necessarily in the frames directly adjacent. For instance, in case of an occlusion, the block from an adjacent frame does not need to be considered for filtering. Moreover, the $M$ neighbouring blocks may be chosen not only from the frames previously encoded/decoded but also from the frames following the frame including the current block. The $M$ neighbouring blocks may also be selected from both the temporal and the spatial neighbourhood of the current block.

The filter coefficients $w_{k,1},...,w_{k,M}$, which minimize the mean squared error between the wanted signal $c_1$-$o_1$,..., $c_K$-$o_K$ and the filtered signal $c_1^{m},...,c_K^{m}$ can be determined by solving the Wiener-Hopf equations:

$$\begin{bmatrix} w_{k,1} \\ w_{k,2} \\ \vdots \\ w_{k,M} \end{bmatrix} = \begin{bmatrix} E[c_{k,1}'' \cdot c_{k,1}''] & E[c_{k,1}'' \cdot c_{k,2}''] & \cdots & E[c_{k,1}'' \cdot c_{k,M}''] \\ E[c_{k,2}'' \cdot c_{k,1}''] & E[c_{k,2}'' \cdot c_{k,2}''] & \cdots & \vdots \\ \vdots & \vdots & \ddots & \vdots \\ E[c_{k,M}'' \cdot c_{k,1}''] & \cdots & \cdots & E[c_{k,M}'' \cdot c_{k,M}''] \end{bmatrix}^{-1} \cdot \begin{bmatrix} E[(c_k - o_k) \cdot c_{k,1}''] \\ E[(c_k - o_k) \cdot c_{k,2}''] \\ \vdots \\ E[(c_k - o_k) \cdot c_{k,M}''] \end{bmatrix}.$$

The computation of the filter coefficients $w_{k,1},...,w_{k,M}$ requires the knowledge of all expected values (correlation terms) in the Wiener-Hopf equations.

Similarly, the filter design 1830 in the encoder 1800 for the post filter 1940 in the decoder 1900 can be performed. Again, the mean values of the transformation coefficients $c_1',...,c_K'$ of the reconstructed signal $s'$ and the transformation coefficients $c_1,...,c_k$ of the original input signal $s$ are adjusted by the offsets $o_1',...,o_K'$ corresponding to $o_k' = E[c_k']$ and by the offsets $o_1,...,o_k$ corresponding to $o_k=E[c_k]$, with $k=1,...,K$. Obtaining the filter coefficients by minimizing the mean squared error between the desired signal $c_1$-$o_1$,...,$c_K$-$o_K$ and the filtered signal $c_1^{m},...,c_K^{m}$ leads, again, to a system of Wiener-Hopf equations as shown above.

The filter design 2140, 2230, and 2330 for the respective example encoders 2100, 2200, and 2300 and/or the corresponding decoders is exemplified in the following. The result of the filter design may be used to set up, for instance, a filter 2140, 2230, 2440 according to the filter shown in Figure 25.

Hereby, the prediction signal $\hat{s}$, the quantized prediction error signal $e'$, and the reconstructed signal $s'$ are considered separately. The corresponding offsets $o'_{1,s'},...,o'_{K,s'}$ are calculated as $o'_{k,s'} = E\left[c'_{k,s'}\right]$, the offsets $o'_{1,e'},...,o'_{K,e'}$ are calculated as $o'_{k,e'} = E\left[c'_{k,e'}\right]$, the offsets $o'_{1,\hat{s}},...,o'_{K,\hat{s}}$ are calculated as $o'_{k,\hat{s}} = E\left[c'_{k,\hat{s}}\right]$, and the offsets $o_1,...,o_K$ are calculated as $o_k = E[c_k]$, with $k=1,...,K$.

The optimization criterion for the design of the $K$ filters in the frequency domain is, again, the minimum mean squared error between the desired signal $c_1$-$o_1$,...,$c_k$-$o_K$ and the filtered signal $c''_1,...,c''_K$. The linear filtering is performed as

$$c_k^m = \sum_{m=1}^{M} w_{k,s',m} \cdot c''_{k,s',m} + \sum_{n=1}^{N} w_{k,\hat{s},n} \cdot c''_{k,\hat{s},n} + \sum_{o=1}^{O} w_{k,e',o} \cdot c''_{k,e',o} \ ,$$

wherein $w_{k,s',1},...,w_{k,s',M}$ are $M \cdot K$ filter coefficients for the reconstructed signal, $w_{k,\hat{s},1},...,w_{k,\hat{s},N}$ are $N \cdot K$ filter coefficients for the prediction signal, and $w_{k,e'1},...,w_{k,e',O}$ are $O \cdot K$ filter coefficients for the quantized prediction error signal. Parameters $M$, $N$, and $O$ denote the filter order. Each filter weights the $M+N+O$ transformation coefficients $c''_{k,s',m}, c''_{k,\hat{s},n}, c''_{k,e',o}$ of the same frequency component of $M + N + O$ blocks.

The filter coefficients, which minimize the mean squared error between the desired signal $c_1$-$o_1$,...,$c_K$-$o_K$ and the filtered signal $c''_1,...,c''_K$ can be determined by the following system of Wiener-Hopf equations:

$$
\begin{bmatrix} w_{k,s',1} \\ w_{k,s',2} \\ \vdots \\ w_{k,s',M} \\ w_{k,\hat{s},1} \\ w_{k,\hat{s},2} \\ \vdots \\ w_{k,\hat{s},N} \\ w_{k,e',1} \\ w_{k,e',2} \\ \vdots \\ w_{k,e',O} \end{bmatrix}
=
\begin{bmatrix} \underline{E}\left[c''_{k,s',i} \cdot c''_{k,s',j}\right] & \underline{E}\left[c''_{k,s',i} \cdot c''_{k,\hat{s},j}\right] & \underline{E}\left[c''_{k,s',i} \cdot c''_{k,e',j}\right] \\ \underline{E}\left[c''_{k,\hat{s},i} \cdot c''_{k,s',j}\right] & \underline{E}\left[c''_{k,\hat{s},i} \cdot c''_{k,\hat{s},j}\right] & \underline{E}\left[c''_{k,\hat{s},i} \cdot c''_{k,e',j}\right] \\ \underline{E}\left[c''_{k,e',i} \cdot c''_{k,s',j}\right] & \underline{E}\left[c''_{k,e',i} \cdot c''_{k,\hat{s},j}\right] & \underline{E}\left[c''_{k,e',i} \cdot c''_{k,e',j}\right] \end{bmatrix}^{-1}
\cdot
\begin{bmatrix} E\left[c''_{k,s',1} \cdot (c_k - o_k)\right] \\ E\left[c''_{k,s',2} \cdot (c_k - o_k)\right] \\ \vdots \\ E\left[c''_{k,s',M} \cdot (c_k - o_k)\right] \\ E\left[c''_{k,\hat{s},1} \cdot (c_k - o_k)\right] \\ E\left[c''_{k,\hat{s},2} \cdot (c_k - o_k)\right] \\ \vdots \\ E\left[c''_{k,\hat{s},N} \cdot (c_k - o_k)\right] \\ E\left[c''_{k,e',1} \cdot (c_k - o_k)\right] \\ E\left[c''_{k,e',2} \cdot (c_k - o_k)\right] \\ \vdots \\ E\left[c''_{k,e',O} \cdot (c_k - o_k)\right] \end{bmatrix} ,
$$

wherein $\underline{E}\left[x_i y_j\right]$ denotes a sub-matrix consisting of all cross correlation terms between $x_i$ and $x_j$.

The filter design and/or filtering in frequency domain may be performed for selected coefficients only. For instance, only the DC coefficients may be filtered. Alternatively, for instance, a set of the first L coefficients may be filtered, or the coefficients to be filtered may be determined based on the content of the video. In particular, the values of the transformation coefficients may be evaluated in order to determine if the filtering shall be applied or not. This provides the possibility to disable the filtering, for instance, in the case where the values of transformation coefficients to be filtered vary considerably. The evaluation of transformation coefficient values is preferably based on a comparison with a threshold. For instance, differences between the transformation coefficients of the current block and another block used for filtering is calculated and based thereon, the filtering is enabled or disabled. If the difference between the coefficients exceeds the threshold, filtering is disabled. Otherwise, the filtering is enabled. The decision can alternatively be based on a statistic of the transformation coefficient within the neigbouring blocks such as variance. If variance of the transformation coefficients of the same frequency in the neigbouring blocks used for filtering exceeds a threshold, the filtering is disabled. A threshold per frequency component may be set based on quantization parameter, or fixed, or signalized together with the encoded video data. The possibility of disabling the filtering may increase the quality of the filtered signal in cases where the characteristics of blocks to be filtered over differ substantially, e.g., if high gradients are present (edges in spatially neighbouring blocks, scene changes in temporally neighbouring blocks).

According to the above description, the transformation coefficients were described as having been obtained by transforming the ordinary (typically used) macroblocks sampled vertically and horizontally in a raster given by the input color format. However, the present invention is not limited to determining filter information, setting-up the filter and filtering of the transformation coefficients obtained in this way. The blocks for transformation may be, for instance, also sampled after having been rotated by a predefined angle such as 45°. This may be of advantage for blocks with certain contents. Both the sampling and the transformation do not necessarily correspond to those of a video code applied.

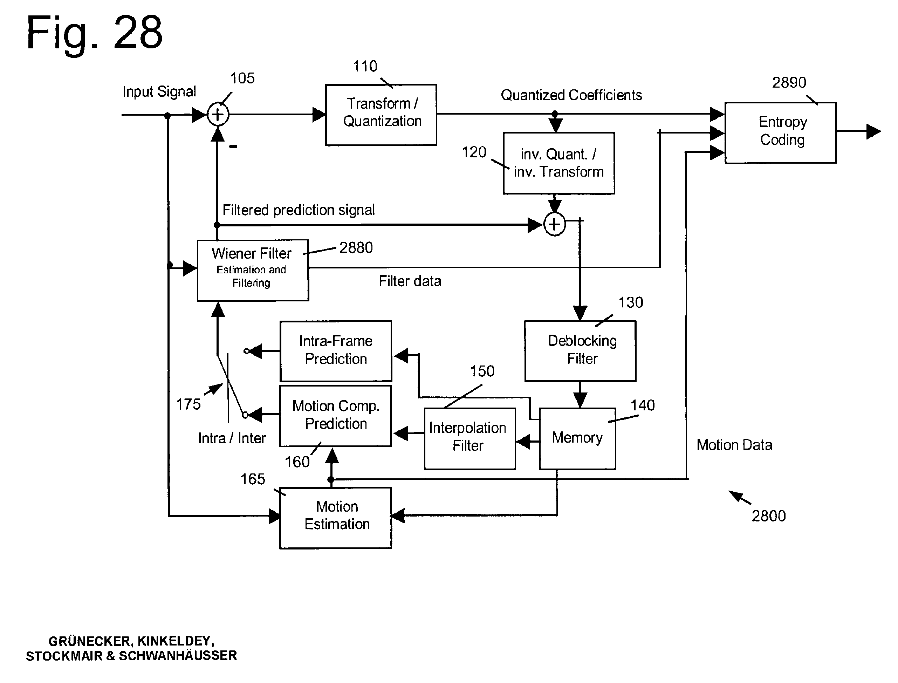

Figure 28 illustrates another example encoder 2800 in accordance with the present invention wherein only the prediction signal is filtered 2880 in frequency domain in the loop. The filter parameter are estimated as Wiener filter coefficients based on the input signal and the predicted signal. The filtered prediction signal is then used for further encoding 110, 2890 and for the reconstruction before the deblocking filtering 130. Filter data are encoded by an entropy encoder 2890 and provided to the decoder side.

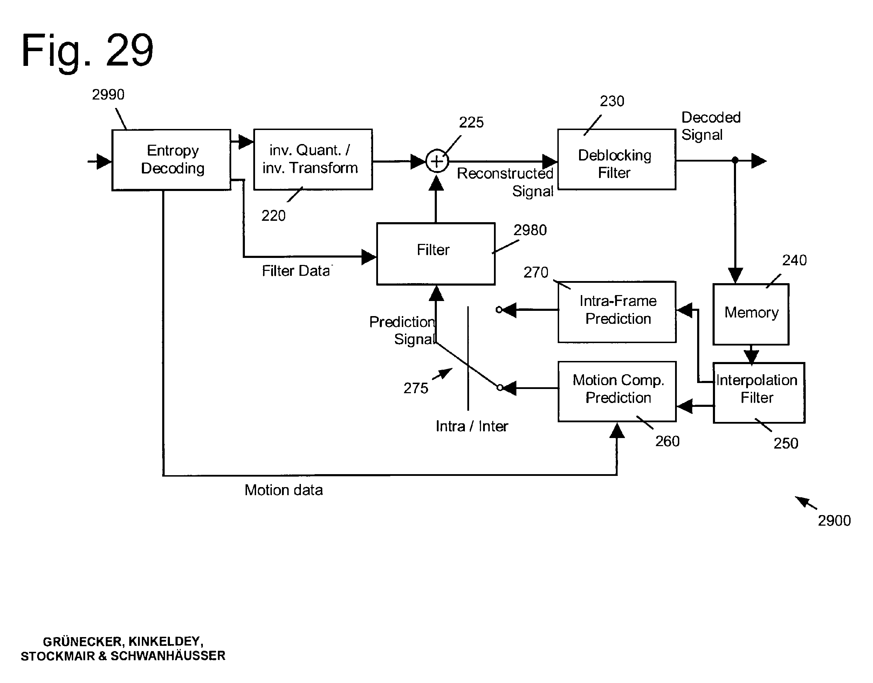

The corresponding decoder 2900 is shown in Figure 29. Entropy decoder 2990 decodes the filter data and passes them to the filter 2980 for filtering the prediction signal. The prediction signal is filtered before it is used for reconstruction 225 and deblocking filtering 230. Such filtering of the prediction signal enables minimizing of the prediction error, and thus, further improving the reconstructed video quality.

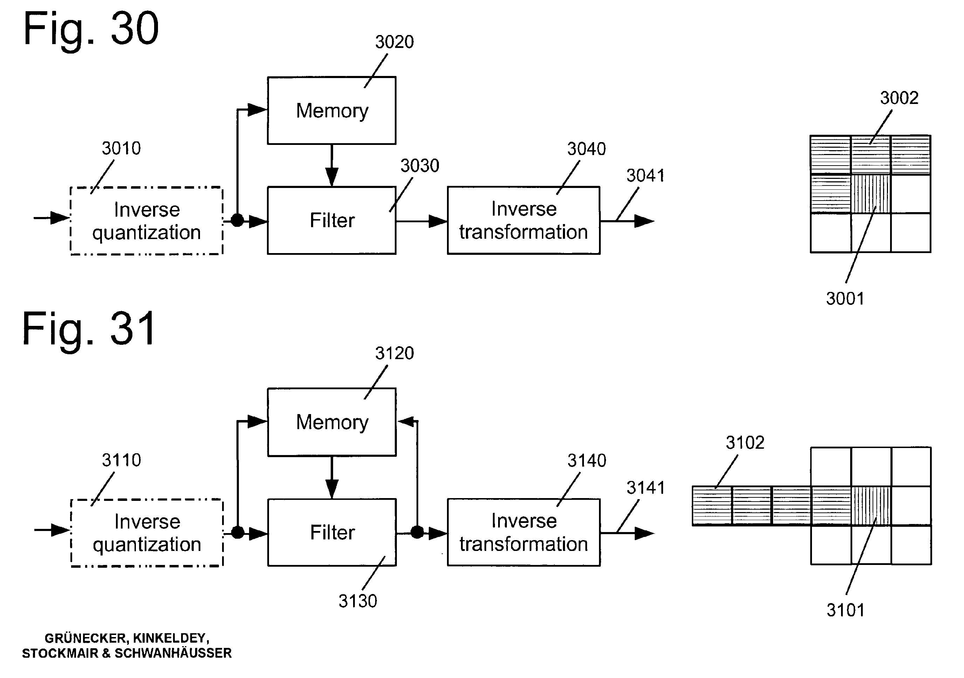

Figure 30 shows details of an example encoder in accordance with the present invention. If the filtering is applied by weighting the transformation coefficients of same frequency from different (spatially and/or temporally neighbouring) blocks, it is necessary to store these neigbouring blocks. If the filtering is applied to the reconstructed video signal, no additional storage capacity is needed, since the reconstructed video signal is stored within the loop in the memory 140, 240. However, in case of filtering 3020, for instance, a current block 3001 of the prediction signal or the prediction error signal, the values of coefficients of the neigbouring blocks 3002 have to be stored in memory 3020. The filtered signal is then inverse transformed and the inverse transformed signal 3041 can be used for reconstruction. The neighbouring blocks 3002 in this example are the previously encoded/decoded spatially neighbouring blocks. However, in general, arbitrary number of block at different positions within the video sequence may be used.

Figure 31 illustrates another example wherein the filtering 3130 is an infinite impulse response (IIR) filtering. Unlike finite response filtering (FIR), the IIR filters weight not only the samples of the input signal but also the samples of the output (filtered) signal. Accordingly, the filtered signal has to be stored in memory 3120 in addition to the signal to be filtered. Although most of the examples above related to FIR filtering, the present invention is not limited thereto. While FIR filters are in general easier to design, IIR filtering in frequency domain may provide better performance. The blocks involved in the filtering of the current block 3101 are in general all previously filtered blocks 3102. In Figure 31, only four previous blocks are shown. However, due to weighting of already filtered signal, theoretically all previously filtered blocks contribute to the result of filtering. The degree of contribution of each block decreases with its distance (spatial and/or temporal - according to the choice of the neighbouring blocks) from the current block 3101.

The above embodiments of the present invention are not restricted with respect to adaptivity of the filters applied. The filters employed at the encoder 1300 and/or decoder 1400 may be designed once per video sequence, or even based on several video sequences. However, adapting the filter design to the current statistics typically results to an improved image quality. The filter design may be performed, for instance, regularly per group of pictures, or per image, or even per slice or per macroblock, block or per a number of such image elements. Correspondingly, the filter information may be provided (signaled) with the same regularity. However, it may be an advantage to provide the filter information less frequently than performing the filter design. In particular if information for calculating the filter coefficients is provided such as cross correlation between the desired signal and the filtered signal, or autocorrelation of noise, this information may be sent less frequently than the filter coefficients are really calculated. While the filter information is not updated, the additional information necessary for calculating the filter coefficients, which can be obtained from the decoded video transformation coefficients and/or video signal, is refreshed. The filter design and/or signaling of the filter information may also be performed irregularly, for instance, when the statistics of the video signal changes significantly. The local adaption of the filter may be achieved in similar ways as disclosed in the European patent application with application number 08015661.5, which is incorporated herein by reference. Furthermore, the quantization settings such as quantization parameter and/or quantization matrix values may be used to determine the filter coefficients for the particular frequency components.

In the case of adaptive filters, filter information, e.g. filter coefficients, are (entropy) encoded and provided to the decoder as a side information. In the context of the H.264/MPEG-4 AVC coding scheme or its future enhancements and following standards, the filter information, may preferably be transmitted in the slice header, in the picture parameter set (PPS) NAL unit, or in the sequence parameter set (SPS) NAL unit. For the adaptive post filter schemes, the post filter information can also be sent as an SEI (Supplemental Enhancement Information) to the decoder.

When the quantized prediction error is considered in the filtering process (i.e. for the filter design and/or filtering), it does not necessarily need to be transformed separately as shown in Figure 25 since it is already available in the transform domain. However, the transformation may be chosen regardless the transformation 110, 120 used by the encoder. Such transformation and/or inverse transformation may be determined at the encoder, encoded and provided to the decoder.

Moreover, the block grid used for the transformation in the filtering process (at least one of the design and application of the filter) need not be necessarily the same as the block grid in one of the encoding steps such as transformation 110. The block grid for the filtering process may be for example shifted by one or two picture elements (such as pixels) to the left, right, top and/or bottom. Any other shift is possible. The blocks used for filter design and filter application does not necessarily have to have the same size as the blocky used for encoding.

The number of transforms that are applied may be over complete. This means that more coefficients in the transform domain may be generated than picture elements in the spatial domain by the use of overlapping transforms. This would result in more than one filtered representation for each picture element (for instance pixel value). These could be weighted to get a final filtered representation. This weighting could also be adaptive and could be encoded and provided to the decoder.

The entropy encoders applied in the above encoder examples are not necessarily the same. Preferably, the entropy coding of the filter information is adapted to the statistics thereof in order to achieve higher compression gain.

The examples of the embodiments of the present invention were described with focus on Wiener filter design. This is because Wiener filter can easily be calculated based on the knowledge of the first two statistic moments. However, other filter design may also be applied, which may, for instance take into account also higher order statistics (e.g. maximum likelihood estimation) or optimize other norm or metric than mean squared error.

Figure 32 illustrates a system for transferring a video signal from an encoder side to a decoder side in accordance with the present invention. An input video signal is encoded by an encoder 3201 and provided to a channel 3202. The encoder 3201 is an encoder in accordance with any of the embodiments of the present invention as described above. The channel 3202 is either storage or any transmission channel. The storage may be, for instance, any volatile or non-volatile memory, any magnetic or optical medium, a mass-storage, etc. The transmission channel may be formed by physical resources of any transmission system, wireless or wired, fixed or mobile, such as xDSL, ISDN, WLAN, GPRS, UMTS, Internet, or any standardized or proprietary system. Apart from the encoder, the encoder side may also include preprocessing of the input video signal such as format conversion and/or transmitter for transmitting the encoded video signal over the channel 3202 or an application for transferring the encoded video signal into the storage. The encoded video signal is then obtained from the channel 3202 by a decoder 3203. The decoder 3203 is a decoder in accordance with any embodiment of the present invention as described above. The decoder decodes the encoded video signal. Apart from the decoder, the decoder side may further include a receiver for receiving the encoded video signal from a transmission channel, or an application for extracting the encoded video data from the storage, and/or post-processing means for post processing of the decoded video signal, such as format conversion.

Another embodiment of the invention relates to the implementation of the above described various embodiments using hardware and software. It is recognized that the various embodiments of the invention may be implemented or performed using computing devices (processors). A computing device or processor may for example be general-purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

Most of the examples have been outlined in relation to an H.264/AVC based video coding system, and the terminology mainly relates to the H.264/AVC terminology. However, this terminology and the description of the various embodiments with respect to H.264/AVC based coding is not intended to limit the principles and ideas of the invention to such systems. Also the detailed explanations of the encoding and decoding in compliance with the H.264/AVC standard are intended to better understand the exemplary embodiments described herein and should not be understood as limiting the invention to the described specific implementations of processes and functions in the video coding. Nevertheless, the improvements proposed herein may be readily applied in the video coding described. Furthermore the concept of the invention may be also readily used in the enhancements of H.264/AVC coding currently discussed by the JVT.

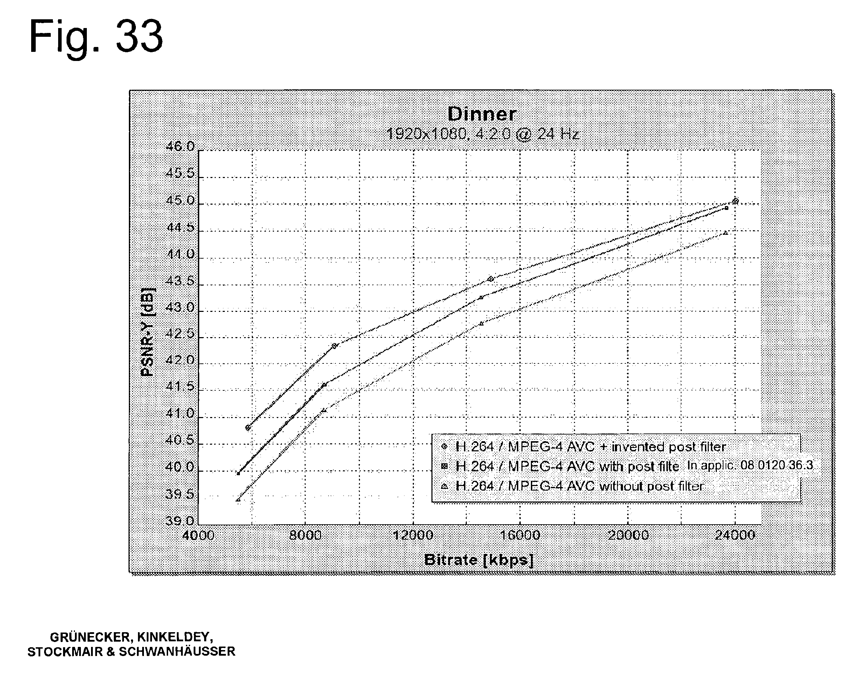

Figure 33 is a graph illustrating an example of benefit that can be achieved by the present invention. The graph shows the Y-PSNR (peak signal to noise ratio of the luminance component Y) with respect to bit rate required for encoding the MPEG test sequence "Dinner" in YUV 4:2:0 color space with spatial resolution 1920 x 1080 pixels and frame rate of 24 frames per second. A coding scheme according to the present invention is compared to H.264/MPEG-4 AVC without post filter and to H.264/MPEG-4 AVC enhanced by a non-separable two-dimensional Wiener post filter according to European patent application Nr. 08 0120 36.3. Experiments were performed using a quantization weighting matrix (Q-Matrix). Intra coding and a 4x4 transform has been applied.

Summarizing, the encoding and decoding of a video signal according to the present invention employ filter design and filtering in the frequency domain and allow providing of filter data for setting-up a corresponding filter from the encoder side to a decoder side. Filtering in the frequency domain provides advantages especially for the cases where the noise is also inserted in the frequency domain, for instance, in video coding based on quantizing the transformed video signal.


**Claims**

1. A method for decoding an encoded video signal including at least one video frame, the method comprising the steps of:

    filtering (1440) a video signal (1411) by a filter;
    **characterized by**
    setting-up (1435) the filter for the filtering of blocks of the video signal in the frequency domain, the setting-up being performed for each of the blocks individually ; and
    in that the filtering (1440) of the video signal (1411) is performed for each of the blocks individually in the frequency domain.

2. A method according to claim 1, further comprising the step of obtaining filter data (1431) from the encoder side for filtering the video signal in the frequency domain, wherein the setting-up (1435) the filter is based on the obtained filter data (1431).

3. A method according to claim 1 or 2 further comprising the step of:

    obtaining from the encoder side a prediction error signal transformed in the frequency domain;
    inverse-transforming (220) the obtained prediction error signal into the spatial domain;
    predicting (260, 270) a video signal in the spatial domain spatially or temporally by a prediction signal; and
    calculating (205) a reconstructed video signal as a sum of the prediction error signal in the spatial domain and the prediction signal,
    wherein the filtering (1440) is applied to the video signal (1411), which is the reconstructed video signal transformed in the frequency domain or the obtained prediction error signal in the frequency domain.

4. A method according to claim 3 wherein filter coefficients for the filter are determined based on the prediction signal, the quantized prediction error signal and the reconstructed video signal.

5. A method for encoding a video signal including at least one video frame, the method comprising the steps of:

    transforming (1310) a video signal (1301) into the frequency domain; and
    providing filter data (1331) for filtering the video signal to a decoder side;
    **characterized by**
    determining (1330) the filter data for filtering the video signal in the frequency domain, wherein the filter data (1331) are determined based on the video signal (1311) transformed into the frequency domain.

6. A method according to claim 5 further comprising the steps of
    setting-up (1335) a filter for filtering (1340) of the video signal (1311) in the frequency domain based on the filter data (1331); and
    the filtering (1340) the video signal (1311) by the filter in the frequency domain.

7. A method according to any of claims 1 to 4 or 6 wherein
    the filtering (1340, 1440) is at least one of a loop filtering and a post filtering applied to the video signal (1311, 1411);
    filter coefficients for the filter are estimated in the frequency domain as Wiener filter coefficients.

8. A method according to claim 5 further comprising the steps of

predicting (160, 170) an input video signal in the spatial domain spatially or temporally by a prediction signal and calculating (105) a prediction error signal as a difference between the input video signal and the prediction signal, wherein the video signal transformed in the transformation step (110) is the prediction error signal and the determining (1330) of the filter data is performed based on the transformed prediction error signal.

9. A method according to any of claims 5 or 8 further comprising the step of quantizing (110) the transformed video signal (1311), wherein the step of determining (1330) the filter data comprises calculating a correlation information or filter coefficients based on the transformed video signal in frequency domain before and after the quantizing step.

10. A method according to any of claims 2 to 9 wherein the filter data (1331, 1431) comprises at least one of filter coefficients and offset of the video signal in frequency domain.

11. An apparatus for decoding an encoded video signal including at least one video frame comprising:

   a filter unit (1440) for filtering a video signal by a filter;
   **characterized by**
   filter set-up unit (1435) for setting-up the filter (1440) for the filtering of blocks of the video signal (1441) in the frequency domain, the setting-up being performed for each of the blocks individually; and
   in that the filter unit (1440) is adapted to apply the filter to the video signal (1411) for each of the blocks individually in the frequency domain.

12. An apparatus according to claim 11 wherein filter data (1431) are obtained from the encoder side for filtering the video signal in the frequency domain, and the filter set-up unit is capable of setting-up (1435) the filter based on the obtained filter data (1431).

13. An apparatus according to claim 11 or 12, being capable of obtaining from the encoder side a prediction error signal transformed in the frequency domain;
   inverse-transforming unit (220) for inverse-transforming the obtained prediction error signal into the spatial domain;
   predictor (260, 270) for predicting a video signal in the spatial domain spatially or temporally by a prediction signal; and
   summer (205) for calculating a reconstructed video signal as a sum of the prediction error signal in the spatial domain and the prediction signal,
   wherein the filtering unit (1440) is adapted to apply the filter to the video signal (1411), which is the reconstructed video signal transformed in the frequency domain or the obtained prediction error signal in the frequency domain.

14. An apparatus according to claim 13 wherein the apparatus is capable of determining filter coefficients for the filter based on the prediction signal, the quantized prediction error signal and the reconstructed video signal.

15. An apparatus for encoding a video signal including at least one video frame comprising:

   a transformation unit (1310) for transforming a video signal (1301) into the frequency domain,
   wherein the apparatus is capable of providing filter data (1331) for filtering the video signal to a decoder side;
   **characterized by**
   a filter data determining unit (1330) for determining the filter data (1331) for filtering the video signal in the frequency domain, wherein the filter data (1331) are determined based on the video signal (1311) transformed into the frequency domain.

16. An apparatus according to claim 5 further comprising
   a setting-up unit (1335) for setting-up a filter for a filtering unit (1340) in the frequency domain based on the filter data (1331); and
   the filtering (1340) unit is adapted to filter the video signal (1311) by the filter in the frequency domain.

17. An apparatus according to any of claims 11 to 14 or 16 wherein
   the filtering unit (1340, 1440) is capable of performing at least one of a loop filtering and a post filtering applied to the video signal (1311, 1411);
   the apparatus is capable of estimating filter coefficients for the filter (1340, 1440) in the frequency domain as Wiener filter coefficients.

18. An apparatus according to claim 15 further comprising a predictor (160, 170) for predicting an input video signal in the spatial domain spatially or temporally by a prediction signal and
a subtractor (105) for calculating a prediction error signal as a difference between the input video signal and the prediction signal,
wherein the transformation unit (110) is adapted to transform the video signal, which is the prediction error signal and the filter data determining unit (1330) is capable of determining the filter data based on the transformed prediction error signal.

19. An apparatus according to any of claims 15 or 18 further comprising a quantizer (110) for quantizing the transformed video signal (1311), wherein the filter data determining unit (1330) is capable of determining the filter data by calculating a correlation information or filter coefficients based on the transformed video signal in frequency domain before and after quantizer (110).

20. An apparatus according to any of claims 12 to 19 wherein the filter data (1331, 1431) comprises at least one of filter coefficients and offset of the video signal in frequency domain.

# Fig. 1

EP 2 192 786 A1

# Fig. 2

EP 2 192 786 A1

# Fig. 3

$n$

$s$      +      $s'$      300      Wiener Filter      $s''$

# Fig. 8

$n_1$

$s$    810    DCT    $c_1$    $c_1'$    820    IDCT    $s'$

$c_2$    $c_2'$

$n_2$

GRÜNECKER, KINKELDEY,
STOCKMAIR & SCHWANHÄUSSER

# Fig. 4

Input Signal → 105 → 110 Transform / Quantization → Quantized Coefficients → 490 Entropy Coding

120 inv. Quant. / inv. Transform

Prediction Signal

Quantized prediction error signal

Reconstr. signal

Motion Data

441

170 Intra-Frame Prediction

440

Wiener Filter Estimation and Filtering

Filter Coeffs

160 Motion Comp. Prediction

150 Interpolation Filter

140 Memory

175

Intra / Inter

165 Motion Estimation

400

GRÜNECKER, KINKELDEY,
STOCKMAIR & SCHWANHÄUSSER

EP 2 192 786 A1

# Fig. 5

EP 2 192 786 A1

# Fig. 6

EP 2 192 786 A1

# Fig. 7

Entropy Decoding — 790

New Post Filter information

inv. Quant. / inv. Transform — 220

Quantized prediction error signal

Reconstructed Signal

Deblocking Filter — 230

Decoded Signal

Post Filter — 740

Intra-Frame Prediction — 270

Memory — 240

Prediction Signal

Motion Comp. Prediction — 260

Interpolation Filter — 250

275

Intra / Inter

700

Motion data

GRÜNECKER, KINKELDEY, STOCKMAIR & SCHWANHÄUSSER

EP 2 192 786 A1

# Fig. 9

# Fig. 10

EP 2 192 786 A1

# Fig. 11

# Fig. 32

GRÜNECKER, KINKELDEY,
STOCKMAIR & SCHWANHÄUSSER

# Fig. 12

# Fig. 13A

Transformation — 1310, 1301, 1311
Filter design — 1330, 1331

# Fig. 13B

Transformation — 1310, 1301, 1311
Filter design — 1330, 1331
Filter set-up — 1335
Filter — 1340, 1341

EP 2 192 786 A1

Fig. 14A

Fig. 14B

GRÜNECKER, KINKELDEY,
STOCKMAIR & SCHWANHÄUSSER

# Fig. 15

Input Signal    Prediction error signal    110

Transform / Quantization    Quantized Coefficients

Entropy Coding

1590

1540

Filters in the frequency

Design of filters in the frequency domain    New Loop Filter information

1530

1520    inv. Transform

1531

Quantized prediction error signal

Prediction Signal

Reconstructed signal

130

170

Intra-Frame Prediction

Deblocking Filter

150

Decoded signal    140

Motion Comp. Prediction    Interpolation Filter    Memory

Intra / Inter

160

Motion Data

1500

Motion Estimation

165

GRÜNECKER, KINKELDEY, STOCKMAIR & SCHWANHÄUSSER

EP 2 192 786 A1

# Fig. 16

Entropy Decoding — 1690

1691

Quantized coefficients

New Loop Filter information

Filters in the frequency domain

1640

inv. Transform — 1620

Reconstructed Signal

Quantized prediction error signal

Deblocking Filter — 230

Decoded Signal

270

Prediction Signal

Intra-Frame Prediction

Memory — 240

Motion Comp. Prediction

Interpolation Filter

Intra / Inter

1600

Motion data

260

250

EP 2 192 786 A1

GRÜNECKER, KINKELDEY,
STOCKMAIR & SCHWANHÄUSSER

Fig. 17

# Fig. 18

**1800**

Input Signal

Prediction error signal

**110** Transform / Quantization

Quantized Coefficients

**120** inv. Quant. / inv. Transform

Quantized prediction error signal

**1890** Entropy Coding

New Post Filter information

**1831**

**1830** Design of filters in the frequency domain

Reconstructed signal

**130** Deblocking Filter

Decoded signal

**140** Memory

**150** Interpolation Filter

Motion Data

**170** Intra-Frame Prediction

**160** Motion Comp. Prediction

**165** Motion Estimation

Intra / Inter

Prediction Signal

# Fig. 19

Filters in the frequency domain — Fig. 19

EP 2 192 786 A1

# Fig. 20

EP 2 192 786 A1

GRÜNECKER, KINKELDEY,
STOCKMAIR & SCHWANHÄUSSER

# Fig. 21

Input Signal → (+) → **Transform / Quantization** (110) → Quantized Coefficients → **Entropy Coding** (2190) →

inv. Quant. / inv. Transform (120)

Quantized prediction error signal

Prediction Signal

2131

Motion Data

(+) Reconstr. signal

**Intra-Frame Prediction** (170)

**Filters in the frequency domain** Design and Filtering (2140)

Filter Coeffs

Memory (140)

**Motion Comp. Prediction** (160)

**Interpolation Filter**

Intra / Inter

**Motion Estimation** (165)

2100

EP 2 192 786 A1

42

# Fig. 22

EP 2 192 786 A1

# Fig. 23

Input Signal → Prediction error signal → **Transform / Quantization** (110) → Quantized Coefficients → **Entropy Coding** (2390) →

**inv. Quant. / inv. Transform** (120)

Quantized prediction error signal

2331

New Post Filter information

Prediction Signal

Reconstructed signal

**Design of filters in the frequency domain** (2330)

**Deblocking Filter** (130)

**Intra-Frame Prediction** (170)

Decoded signal

**Motion Comp. Prediction** ← **Interpolation Filter** (150) ← **Memory** (140)

Intra / Inter

Motion Data

**Motion Estimation** (165)

2300

EP 2 192 786 A1

# Fig. 24

2490

Entropy Decoding

New Post Filter information                    2491

220

inv. Quant. / inv. Transform

Quantized prediction error signal

Reconstructed Signal

230

Deblocking Filter

Decoded Signal

Filters in the frequency domain

2440

270

Intra-Frame Prediction

240

Memory

Prediction Signal

Intra / Inter

Motion Comp. Prediction

250

Interpolation Filter

260

Motion data

2400

GRÜNECKER, KINKELDEY,
STOCKMAIR & SCHWANHÄUSSER

EP 2 192 786 A1

Fig. 25

GRÜNECKER, KINKELDEY,
STOCKMAIR & SCHWANHÄUSSER

# Fig. 26A

| Neighboring block (m=2) | Neighboring block (m=3) | Neighboring block (m=4) |
|---|---|---|
| Neighboring block (m=5) | Current block (m=1) | Neighboring block (m=6) |
| Neighboring block (m=7) | Neighboring block (m=8) | Neighboring block (m=9) |

# Fig. 26B

| Neighboring block (m=2) | Neighboring block (m=3) | Neighboring block (m=4) |
|---|---|---|
| Neighboring block (m=5) | Current block (m=1) | Neighboring block (m=6) |
| Neighboring block (m=7) | Neighboring block (m=8) | Neighboring block (m=9) |

EP 2 192 786 A1

# Fig. 27A

# Fig. 27B

EP 2 192 786 A1

# Fig. 28

Input Signal → 105 (+) → 110 Transform / Quantization → Quantized Coefficients → 2890 Entropy Coding →

120 inv. Quant. / inv. Transform

Filtered prediction signal

2880 Wiener Filter Estimation and Filtering

Filter data

(+)

130 Deblocking Filter

Intra-Frame Prediction

150

175 Motion Comp. Prediction 160

Intra / Inter

Interpolation Filter

140 Memory

Motion Data

165 Motion Estimation

2800

EP 2 192 786 A1

# Fig. 29

EP 2 192 786 A1

# Fig. 30

# Fig. 31

EP 2 192 786 A1

# Fig. 33

GRÜNECKER, KINKELDEY,
STOCKMAIR & SCHWANHÄUSSER

Europäisches
Patentamt

European
Patent Office

Office européen
des brevets

**EUROPEAN SEARCH REPORT**

Application Number

EP 08 02 0651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | EP 1 841 230 A (MATSUSHITA ELECTRIC IND CO LTD [JP]) 3 October 2007 (2007-10-03)<br><br>* paragraphs [0001], [0003], [0004], [0041], [0047], [0049] *<br>* figures 1,2 *<br>----- | 1-3,5,6, 8,11-13, 15,16,18 | INV.<br>H04N7/50<br>H04N7/26 |
| A | PURI A ET AL: "Video coding using the H.264/MPEG-4 AVC compression standard" SIGNAL PROCESSING. IMAGE COMMUNICATION, ELSEVIER SCIENCE PUBLISHERS, AMSTERDAM, NL,<br>vol. 19, no. 9,<br>1 October 2004 (2004-10-01), pages 793-849, XP004607150<br>ISSN: 0923-5965<br>* section 4.2.3 *<br>----- | 1-20 | |
| X | TAO CHEN ET AL: "Adaptive Postfiltering of Transform Coefficients for the Reduction of Blocking Artifacts" IEEE TRANSACTIONS ON CIRCUITS AND SYSTEMS FOR VIDEO TECHNOLOGY, IEEE SERVICE CENTER, PISCATAWAY, NJ, US,<br>vol. 11, no. 5, 1 May 2001 (2001-05-01), XP011014196<br>ISSN: 1051-8215<br>* page 594, column 1, lines 1-15 *<br>* page 595, column 1, line 42 - column 2, line 33 *<br>* page 601, column 2, lines 1-4 *<br>----- | 1,11 | TECHNICAL FIELDS SEARCHED (IPC)<br><br>H04N |

The present search report has been drawn up for all claims

| Place of search | Date of completion of the search | Examiner |
|---|---|---|
| The Hague | 8 June 2009 | Mayer, Claudia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EUROPEAN SEARCH REPORT**

Europäisches Patentamt
European Patent Office
Office européen des brevets

Application Number

EP 08 02 0651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BYUNG CHEOL SONG ET AL: "Transform-Domain Wiener Filtering for H. 264/AVC Video Encoding and its Implementation" IMAGE PROCESSING, 2005. ICIP 2005. IEEE INTERNATIONAL CONFERENCE ON GENOVA, ITALY 11-14 SEPT. 2005, PISCATAWAY, NJ, USA,IEEE, vol. 3, 11 September 2005 (2005-09-11), pages 529-532, XP010852706 ISBN: 978-0-7803-9134-5 * the whole document * ----- | 1-20 | |

| | |
|---|---|
| | TECHNICAL FIELDS SEARCHED (IPC) |

The present search report has been drawn up for all claims

| Place of search | Date of completion of the search | Examiner |
|---|---|---|
| The Hague | 8 June 2009 | Mayer, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 08 02 0651

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2009

| Patent document cited in search report | | Publication date | Patent family member(s) | | Publication date |
|---|---|---|---|---|---|
| EP 1841230 | A | 03-10-2007 | CN | 101411201 A | 15-04-2009 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1841230 A
- EP 08012036 A

- EP 08015661 A

**Non-patent literature cited in the description**

- 4daptive Filter Theoiy. **S. Haykin.** Prentice Hall Information and System Sciences Series. Prentice Hall, 2002